# EUROPÄISCHE PATENTSCHRIFT

(11) **EP 2 281 223 B1**
(45) Veröffentlichungstag und Bekanntmachung des Hinweises auf die Patenterteilung: **25.05.2016**
(21) Anmeldenummer: 09733468.4
(22) Anmeldetag: 16.04.2009
(51) Int. Cl.: G05B 19/409

(54) **VERFAHREN ZUM BETREIBEN EINER ELEKTRISCH STEUERBAREN TECHNISCHEN EINRICHTUNG SOWIE ENTSPRECHENDE STEUERUNGSEINRICHTUNG**
METHOD FOR OPERATING AN ELECTRICALLY CONTROLLABLE TECHNICAL DEVICE AND CORRESPONDING CONTROL DEVICE
PROCÉDÉ D UTILISATION D UN ÉQUIPEMENT TECHNIQUE COMMANDABLE ÉLECTRIQUEMENT ET DISPOSITIF DE COMMANDE CORRESPONDANT

(30) Priorität: 16.04.2008 AT 22308 U
(43) Veröffentlichungstag der Anmeldung: 09.02.2011
(73) Patentinhaber: KEBA AG, A-4041 Linz (AT)
(72) Erfinder: STUMMER, Heinz, A-4840 Vöcklabruck (AT); LASINGER, Günter, A-4210 Gallneukirchen (AT)
(74) Vertreter: Burger, Hannes
(86) Internationale Anmeldenummer: PCT/AT2009/000153
(87) Internationale Veröffentlichungsnummer: WO 2009/126984

(56) Entgegenhaltungen:
- JP-A- 61 070 610
- US-A1- 2003 210 258
- US-A1- 2007 027 561
- US-B1- 6 418 536
- US-B1- 6 536 658

## Beschreibung

Die Erfindung betrifft ein Verfahren zum Betreiben einer elektrisch steuerbaren technischen Einrichtung, insbesondere einer Maschine, einer Anlage, eines Gerätes oder eines technischen Prozesses, sowie eine entsprechende Steuerungseinrichtung für eine solche technische Einrichtung, wie dies in den Ansprüchen 1 und 17 angegeben ist.

Aus der US 2007/027561 A1 ist es bekannt ein Verfahren zum Betreiben des Displays einer elektrischen steuerbaren technischen Einrichtung.

Aus der JP 5-011713 A und der US 6,418,536 B1 sind technische Ausgestaltungen bekannt, bei denen ein Infrarot-Sensor mit einem Display kombiniert wird und das Display oder der Computer nur dann eingeschaltet wird, wenn sich ein Benutzer unmittelbar davor befindet. Der Zweck dieser Ausführungen liegt darin, Energie zu sparen bzw. die Lebensdauer des Displays zu verlängern.

Weiters ist es aus der US 6,367,020 B1 bekannt, einen Personal-Computer bzw. dessen Bildschirm mit einem Näherungssensor, beispielsweise mit einem Ultraschall-, Infrarot- oder einem elektromagnetischen Sensor auszustatten und bei Abwesenheit eines Benutzers den Bildschirm automatisch abzublenden und mit einem Passwort zu schützen. Dieser Näherungssensor kann auch durch einen Sensor gebildet sein, welcher zur Detektierung des Gewichts eines Benutzers geeignet ist.

Aus der US 2003/0210258 A1 ist es weiters im Bereich der Personal-Computer bekannt, die Position des Benutzers vor dem Bildschirm mittels mehrerer Näherungssensoren zu erfassen und davon abhängig Zoom- und Scroll-Funktionen einer bestimmten Darstellung am Bildschirm, beispielsweise einer Landkarte, zu implementieren.

Aus der US 6,536,658 B1 ist es für eine Anwendung bei Bank- oder Verkaufsautomaten und für Werbeplattformen bekannt, abhängig von einer sensorisch erfassten Anwesenheit eines Konsumenten den Automaten aus einem Bereitschafts-Zustand hochzufahren oder beim Verlassen des Automaten einen definierten Betriebszustand einzunehmen und beispielsweise Werbefilme oder eine Login-Maske auszugeben.

Aus dem Umfeld industrieller Steuerungssysteme sind keine vergleichbaren Lösungen bekannt. Die bisherige Situation ist dabei derart, dass in industriellen Fertigungshallen oftmals eine Vielzahl von im Wesentlichen vollautomatisch arbeitenden Fertigungsmaschinen, wie z.B. eine Mehrzahl von Spritzgießmaschinen steht. Eine einzelne Bedienperson bzw. ein Maschinenwart beobachtet und überwacht dabei in der Regel mehrere Maschinen und greift üblicherweise nur beim Eintreten von besonderen Ereignissen oder Betriebszuständen ein. Insbesondere ist eine Handlung der Bedienperson nur dann erforderlich, wenn die Fertigungsanlage nicht oder nicht ausreichend selbsttätig reagieren kann, da z.B. ein Nachfüllen von Material, ein Abholen gefertigter Teile, ein Beheben von Betriebsstörungen, eine Durchführung von Wartungs-, Reinigungs- oder Justagearbeiten, eine Überprüfung und Justierung von qualitätsrelevanten Prozessparametern oder dgl. erforderlich ist.

Die Gesamtanzahl von Parametern, Messwerten und Zustandsdaten, die den Betrieb und den Betriebszustand einer Fertigungsmaschine bzw. des Fertigungsprozesses charakterisieren, ist dabei zumeist erheblich. Für die Programmierung, Bedienung und Parametrierung solcher Maschinen sind daher leistungsfähige Mensch-Maschine-Schnittstellen erforderlich, die heute in der Regel eine Mehrzahl von Eingabeelementen in der Art von Schaltern, Tasten bzw. Tastenfeldern, einen Touch-Screen, sowie einen relativ hochauflösenden und großflächigen Bildschirm umfassen. Üblicherweise sind solche Mensch-Maschine-Schnittstellen als Bedienterminals ausgebildet, die an der Maschine oder in der Nähe der jeweiligen Maschine, wie z.B. in der Front eines Schaltschranks oder des Maschinengehäuses integriert sind. Diese stationären Bedienterminals sind in der Lage, viele Informationen gleichzeitig und trotzdem übersichtlich darzustellen und komplexe Abläufe und Menüstrukturen visuell ansprechend darzustellen. Bei Programmier- und Einstellarbeiten sowie bei der Störungsbehebung an der Maschine wird die volle Komplexität der Informationsdarstellung benötigt wird. Dies ist jedoch nicht für alle Betriebszustände oder Systemfälle zweckmäßig.

Der vorliegenden Erfindung liegt die Aufgabe zugrunde, Verfahren und Vorrichtungen zu schaffen, mit welchen der Bedienperson bzw. dem Wartungspersonal einer elektrisch steuerbaren, technischen Einrichtung eine verbesserte bzw. eine möglichst komfortable und fehlersichere Überwachung und eine allfällige Veränderung von betriebsrelevanten Parametern ermöglicht wird.

Diese Aufgabe der Erfindung wird durch die Verfahrensmaßnahmen nach Anspruch 1 und durch eine Steuerungseinrichtung gemäß Anspruch 17 gelöst.

Vorteilhaft ist dabei, dass eine automatische Bestimmung der Anwesenheit oder Nichtanwesenheit einer Person im unmittelbaren Nah- bzw. Bedienbereich des Bedienpanels erfolgt und abgeleitet vom Ergebnis dieser automatischen Bestimmung ein automatischer Wechsel der Bildschirmdarstellung zwischen einer Detaildarstellung, welche für die Betrachtung aus dem unmittelbaren Nahbereich zweckmäßig ist, und einer oder mehrerer Darstellungen mit nur relativ wenigen charakteristischen Prozesswerten, welche für die Betrachtung aus größerer Entfernung vorgesehen sind, erfolgt. Insbesondere kann dadurch die jeweilige Person auch außerhalb des unmittelbaren Bedienbereiches, welcher durch den Nahbereich vor dem üblicherweise stationären Bedienpanel definiert ist, eine optimale Überwachung bzw. visuelle Erfassung der interessierenden bzw. relevanten Prozesswerte relativ mühelos durchführen. D.h. die jeweilige Person, insbesondere eine Bedien- bzw. Wartungsperson, muss sich nicht ständig im unmittelbaren Nahbereich des stationären Bedienpanels aufhalten, sondern kann sich die zuständige Person auch etwas weiter vom Bedienpanel entfernen und dennoch die jeweils relevanten Prozessdaten bzw. Informationen evaluieren. Beispielsweise kann die zuständige Person direkt bzw. relativ nahe bei der entsprechenden technischen Einrichtung stehen und so den jeweiligen technischen Prozess, wie z.B. eine Werkstückbearbeitung oder einen Fertigungsprozess, möglichst exakt beobachten. Insbesondere kann sich die jeweilige Person an geeigneter Stelle positionieren, um den entsprechenden Ablauf optimal einsehen zu können. Gleichzeitig kann die zuständige Person die relevanten Prozessdaten bzw. sonstige Informationen am Bildschirm des stationären Bedienpanels lesen bzw. inhaltlich erfassen und so die Abläufe optimal kontrollieren. Zudem ist es möglich, direkt an der technischen Einrichtung diverse Veränderungen von Einstellungen vorzunehmen und gleichzeitig die jeweiligen Anzeigewerte, insbesondere die entsprechenden Ist-Werte am Bildschirm des stationären Bedienpanels zu verfolgen. Damit lassen sich also manche Programmiertätigkeiten oder Neueinstellungen vergleichsweise rascher und zielführender vornehmen. Ein wesentlicher Vorteil liegt auch darin, dass die Umschaltungen zwischen dem detailreichen bzw. fein strukturierten Bildschirmlayout und dem vergleichsweise überblicksartig gestalteten Bildschirmlayout, welches für eine Betrachtung aus größerer Entfernung konzipiert ist, automatisiert erfolgt und dadurch der Bedienungskomfort steigt. Damit einhergehend kann auch eine Steigerung der Verfügbarkeit bzw. Störungsfreiheit der technischen Einrichtung erreicht werden, nachdem die zuständige Person in Abhängigkeit ihrer Relativposition zum Bildschirm des ortsfesten Bedienpanels ohne zusätzlichen Bedienungsaufwand stets optimierte Bildschirmdarstellungen zur Verfügung gestellt bekommt.

Von Vorteil ist auch eine Ausgestaltung nach Anspruch 2, da dadurch zwischen allgemeinen Personen und autorisierten Bedienpersonen automatisiert unterschieden wird. Insbesondere erfolgt durch diese weiterführenden Maßnahmen nur dann eine Umschaltung auf das erste, für Einstell-, Überwachungs- oder Programmiertätigkeiten konzipierte Bildschirmlayout, wenn im unmittelbaren Bedienbereich des Bedienpanels eine befugte Bedienperson erkannt bzw. erfasst wird. Dadurch werden ungewollte wechselnde Bildschirmdarstellungen vermieden, falls allgemeine Personen im Nahbereich des Bedienpanels oder außerhalb des unmittelbaren Bedienbereiches detektiert werden. Das heißt, dass damit unnötige bzw. unzutreffende Umschaltvorgänge verhindert werden können und die vorteilhaften wechselnden Bildschirmdarstellungen nur auf einen bestimmten bzw. relevanten Personenkreis beschränkt sind. Entsprechend einer vorteilhaften, optionalen Weiterbildung können dadurch bei Bedarf auch automatische Zugriffsschutzmaßnahmen implementiert werden, nachdem die Umschaltung auf das erste Bildschirmlayout, welches in der Regel eine Reihe von Einstell- bzw. Programmiermöglichkeiten bietet, nur dann erfolgt, wenn eine befugte Bedienperson detektiert wurde. Allen anderen Personen, insbesondere unbefugten Passanten, bleibt somit eine Veränderung von relevanten Systemparametern bzw. eine Einsichtnahme in Detaildaten automatisch verwehrt.

Ein Vorteil ist auch die Maßnahme nach Anspruch 3, da dadurch völlig automatisch auf das für eine Betrachtung aus größerer Entfernung konzipierte Bildschirmlayout umgeschaltet wird. Zeitweilige Vergesslichkeit bzw. Unachtsamkeit der Bedienperson führt somit nicht zu Komforteinbußen bzw. nicht zu einer Verschlechterung der Überwachungssicherheit der diversen Prozesszustände bzw. Parameter der technischen Einrichtung. Außerdem wird dadurch ein hoher Betriebskomfort erzielt, nachdem manuelle Umschaltvorgänge erübrigt sind. Folglich wird auch jene Zeitdauer, über welche eine Bedienperson mit der Programmierung bzw. Bedienung des Bedienpanels beschäftigt ist, möglichst gering gehalten, sodass sich die Bedienperson auf relevantere bzw. zweckmäßigere Tätigkeiten konzentrieren und damit befassen kann.

Weiters ist eine Maßnahme nach Anspruch 4 von Vorteil, da dadurch ohne einem Erfordernis von zusätzlichen baulichen Maßnahmen eine Detektierung bzw. Erkennung der Anwesenheit einer Person ermöglicht ist. Insbesondere sind lediglich softwaretechnische Implementierungen erforderlich, um automatisiert auf die Anwesenheit einer Person Rückschluss ziehen zu können. Diese Maßnahmen ermöglichen somit eine besonders kostengünstige Umsetzung des erfindungsgemäßen Verfahrens. Darüber hinaus können auch bereits bestehende technische Einrichtungen bzw. Steuerungseinrichtungen in einfacher Art und Weise adaptiert werden, um nachfolgend entsprechend dem erfindungsgemäßen Verfahren betrieben werden zu können.

Von Vorteil sind auch die Maßnahmen nach Anspruch 5, da dadurch in einfacher und relativ kostengünstiger Art und Weise ein automatischer Wechsel der Darstellungen am Bildschirm implementiert werden kann. Insbesondere sind keinerlei bauliche Maßnahmen erforderlich, um die Nichtanwesenheit einer Person ermitteln zu können, sondern ist lediglich der Ablauf einer bestimmten Zeitspanne ein Kriterium dafür, dass sich vor dem Bedienpanel keine Bedienperson befindet. Von besonderem Vorteil ist weiters, dass mit diesen Maßnahmen auch bereits bestehende technische Einrichtungen bzw. Steuerungseinrichtungen in einfacher Art und Weise mit einem Update versehen werden können, um eine Implementierung des erfindungsgemäßen Betriebsverfahrens zu erzielen.

Von Vorteil sind außerdem die Maßnahmen nach Anspruch 6, da dadurch eine optimale Anpassung an verschiedenartige technische Einrichtungen, insbesondere an die jeweiligen Bedienungskomplexitäten bzw. an die jeweiligen Systemgegebenheiten, in einfacher Art und Weise ermöglicht ist.

Ferner sind die Maßnahmen nach Anspruch 7 von Vorteil, da dadurch ein Signal eines speziell konzipierten Sensors herangezogen wird, um die Anwesenheit oder Nichtanwesenheit von Personen automatisiert zu ermitteln. Insbesondere werden dadurch die tatsächlichen Ist-Zustände ermittelt und wird nicht bloß anhand von Nebenerscheinungen bzw. Randbedingungen auf eine Anwesenheit von Personen Rückschluss gezogen. Die entsprechende Maßnahme bietet somit eine besonders hohe Ergebniszuverlässigkeit bzw. Erfassungssicherheit.

Von Vorteil sind auch die Maßnahmen nach Anspruch 8, da dadurch die ordnungsgemäße Funktion des Anwesenheitssensors automatisch überprüft wird. Insbesondere ist bei Betätigung von irgendeinem der Eingabemittel am Bedienpanel grundsätzlich von einer Anwesenheit einer Person im unmittelbaren Nahbereich des Bedienpanels auszugehen. Der Anwesenheitssensor sollte somit gleichzeitig ein entsprechendes Anwesenheitssignal liefern. Erfolgt dies nicht, ist der Anwesenheitssensor entweder defekt oder es ist dessen Empfindlichkeit bzw. Erfassungsbereich entsprechend anzupassen. Diese Anpassung kann dabei automatisch und von der Bedienperson unbemerkt erfolgen. Ein Vorteil liegt dieser Maßnahmen liegt also darin, dass eine periodische bzw. stochastische Funktionsüberprüfung des Anwesenheitssensors automatisiert erfolgt und eine Störung bzw. eine ungünstige Einstellung beim erstmaligen Auftreten sofort erkannt und entsprechend signalisiert bzw. behoben werden kann.

Vorteilhaft sind weiters die Maßnahmen gemäß Anspruch 9, da dadurch bei Bedarf eine statische bzw. fixe Voreinstellung vorgenommen werden kann. Insbesondere können dadurch automatische Umschaltvorgänge deaktiviert werden, wenn dies für besondere Einsatzfälle, insbesondere für spezielle Einstellarbeiten an der technischen Einrichtung, nicht gewünscht bzw. nicht zweckmäßig ist.

Durch die Maßnahmen gemäß Anspruch 10 ist gewährleistet, dass die Bedienperson der technischen Einrichtung all jene Informationen bzw. Daten vorliegend hat, welche vor allem für eine Programmierung bzw. Neueinstellung der technischen Einrichtung benötigt werden. Insbesondere stehen der Bedienperson automatisch auch solche Daten, Bildschirmmasken und Detailinformationen zur Verfügung, welche benötigt werden, um Neuprogrammierungen bzw. Neueinstellungen vornehmen zu können. Dieser hohe Detaillierungsgrad ist vor allem dann zweckmäßig, wenn sich im unmittelbaren Bedienbereich des Bedienpanels eine autorisierte Bedienperson befindet. Die darstellungstechnisch vergleichsweise überblicksartige bzw. hinsichtlich des Informationsgehaltes reduzierte zweite Teilmenge von Informationen ist hingegen besonders zweckmäßig, um aus größerer Entfernung, insbesondere bei Entfernungen, bei denen eine Betätigung bzw. ein Erreichen der Eingabemittel des Bedienpanels nicht mehr möglich ist, eine Beobachtung und Überwachung der wichtigsten Parameter vornehmen zu können.

Bei den Maßnahmen gemäß Anspruch 11 ist von Vorteil, dass im störungsfreien und im wesentlichen vollautomatischen Betrieb der technischen Einrichtung nur die Wiedergabe einiger weniger charakteristischer Prozessparameter und Messwerte erfolgt. Aus einer personellen Kontrolle dieser reduzierten bzw. wesentlichsten Prozessparameter und Messwerte kann dennoch ausreichend zuverlässig auf einen störungsfreien Betrieb der technischen Einrichtung geschlossen werden. Eine zu detaillierte Darstellung einer Vielzahl von weiteren Parametern würde hingegen die Erfassung der wesentlichen Größen erschweren bzw. könnte deren Abweichung in Bezug auf erwartete Soll-Werte unter Umständen nicht oder nicht mit entsprechender Reaktionszeit bemerkt werden. Zudem wird durch die Maßnahmen gemäß Anspruch 11 eine gute Erfassbarkeit der wichtigsten Prozessparameter auch bei einer Einnahme von größeren Entfernungen in Bezug auf den Bildschirm des Bedienpanels erzielt. Weiters können dadurch ausgehend von verschiedenen Stellen an einer größeren Maschine die relevanten Prozessparameter am stationären Bildschirm relativ bequem überwacht bzw. kontrolliert werden, ohne dass ein unmittelbares Herantreten an das Bedienpanel erforderlich ist.

Von Vorteil sind auch die Maßnahmen nach Anspruch 12, da dadurch ein relativ energiesparender Betrieb ermöglicht ist, wobei die jeweiligen Maßnahmen zur Energieeinsparung automatisch eingeleitet werden. Durch die nachfolgende automatische Reaktivierung des Bildschirms entstehen dabei keinerlei Einbußen hinsichtlich der Systemzuverlässigkeit bzw. hinsichtlich einer möglichst hohen Verfügbarkeit der technischen Einrichtung.

Eine weitere Steigerung des Einsparungspotentials an elektrischer Energie wird durch die Maßnahmen gemäß Anspruch 13 erzielt.

Von besonderem Vorteil sind weiters die Maßnahmen nach Anspruch 14, da dadurch zwischen einem allgemeinen Personenkreis und einem befugten bzw. autorisierten Personenkreis automatisiert unterschieden wird. Insbesondere ist es dadurch ermöglicht, die Umschaltvorgänge bzw. die Wechsel der Bildschirmdarstellungen von der Identität bzw. Autorisierung der jeweils erfassten Person abhängig zu machen. D.h. zumindest die automatischen Darstellungswechsel zum ersten Bildschirmlayout können dahingehend beschränkt werden, dass nur bei Erkennung einer autorisierten Bedienperson auf das erste Bildschirmlayout umgeschaltet wird, sobald sich diese autorisierte Bedienperson im unmittelbaren Bedienbereich vor dem Bedienpanel befindet. Zahlreiche, unter Umständen verwirrende Umschaltvorgänge bezüglich der Bildschirmdarstellung können dadurch vermieden werden.

Vorteilhaft sind dabei die weiterführenden Maßnahmen nach Anspruch 15, da dadurch in einfacher Art und Weise ein definierter Erfassungsbereich umgesetzt werden kann, welcher sich im Wesentlichen mit dem physiologisch möglichen bzw. sinnvollen Bedienbereich vor dem Bedienpanel deckt. Insbesondere kann die Erfassungszone für die berührungslos erfassbaren Informationsträger in etwa dem möglichen Bedienbereich vor dem Bedienpanel entsprechen, sodass bereits anhand der Maßnahmen für die Personenidentifikation oder Autorisierungsüberprüfung der jeweilige Bedienbereich und die entsprechende Umschaltbedingung definiert ist.

Von Vorteil sind auch die Maßnahmen gemäß Anspruch 16, da dadurch der entsprechende Personenkreis keinerlei Identifikationsmittel bzw. keinerlei Informationsträger mit sich führen muss und dennoch eine zuverlässige Ermittlung der Identität bzw. Autorisierung der jeweiligen Person vorgenommen werden kann. Insbesondere dann, wenn sich die entsprechende Person im unmittelbaren Bedienbereich vor dem Bedienpanel aufhält, kann eine entsprechende Personenidentifikation bzw. Autorisierungsüberprüfung in einfacher und zuverlässiger Art und Weise ausgeführt werden.

Eine unabhängige Lösung der eingangs gestellten Aufgabe ist in Anspruch 17 angegeben. Die mit dieser erfinderischen Lösung erzielbaren technischen Effekte und Vorteile sind vorhergehend beschrieben worden.

Bei der Weiterbildung gemäß Anspruch 18 ist von Vorteil, dass wahlweise eine integrale Erfassungsvorrichtung geschaffen ist oder eine modulare Anbindung einer entsprechenden Erfassungsvorrichtung an die Steuerung und eine entsprechende Integration der gewünschten Wirkungsweise in den Steuerungsablauf in einfacher Art und Weise ermöglicht ist. Ein besonderer Vorteil der angegebenen Maßnahmen liegt darin, dass zwischen einem allgemeinen Personenkreis und autorisierten Bedienpersonen automatisch unterschieden wird, sodass die automatischen Wechsel der Bildschirmdarstellung auch von der Befugnis bzw. von der Funktion der jeweiligen Person abhängig gemacht werden. Dadurch können z.B. Reizüberflutungen bzw. unnötige Umschaltvorgänge der Bildschirmdarstellung vermieden werden.

Von Vorteil sind auch die Maßnahmen nach Anspruch 19, da dadurch Anwesenheitssensoren verwendet werden können, welche einen relativ engen bzw. klar definierten Erfassungsbereich aufweisen. Dadurch wird ein kostengünstiger Aufbau ermöglicht und ist außerdem eine hohe Unempfindlichkeit gegenüber Störungen bzw. Fremdbeeinflussungen erzielbar.

Durch die Maßnahmen gemäß Anspruch 20 wird eine zuverlässige Erfassung erzielt und können irrelevante Störpegel bzw. Störsignale in einfacher Art und Weise eliminiert bzw. herausgefiltert werden.

Von Vorteil sind auch die Maßnahmen nach Anspruch 21, da dadurch eine an die jeweilige Situation und Beobachtungsdistanz automatisch angepasste Auswahl und Darstellung von Informationen betreffend den Betriebszustand einer Maschine oder einer sonstigen technischen Einrichtung bereitgestellt ist. Insbesondere kann dadurch automatisch oder teilautomatisch und situationsgerecht zwischen diesen jeweils optimalen bzw. optimierten Darstellungsformen bzw. Bildschirmlayouts umgeschaltet werden, um den jeweiligen Gegebenheiten möglichst optimal zu entsprechen bzw. um die jeweilige Bildschirmdarstellung in automatisierter Form zweckmäßig anpassen zu können.

Die Ausgestaltung gemäß Anspruch 22 ermöglicht den Aufbau einer kostengünstigen und dennoch überaus funktionszuverlässigen Erfassungsvorrichtung betreffend die Anwesenheit bzw. Nichtanwesenheit von Personen. Von besonderem Vorteil ist weiters, dass die Detektierungszone bzw. der Erfassungsbereich räumlich ausreichend exakt vorbestimmt bzw. begrenzt werden kann.

Von Vorteil ist auch eine Ausgestaltung nach Anspruch 23, da dadurch neben der Detektierungsmöglichkeit bezüglich der Anwesenheit oder Nichtanwesenheit von Objekten, insbesondere von Personen, in einfacher Art und Weise auch auf eine Distanz bzw. Bewegungsrichtung eines Objektes bzw. einer Person Rückschluss gezogen werden kann. Weiters ist eine Ausführung nach Anspruch 24 von Vorteil, da dadurch von den jeweiligen Personen keinerlei Identifikationsmittel mitgeführt bzw. getragen werden müssen und auch keinerlei PIN-Codes oder dgl. gemerkt oder bereitgehalten werden müssen. Insbesondere kann dadurch in einfacher Art und Weise anhand biometrischer Merkmale, insbesondere anhand eines Fingerabdruckes, einer Iris-Ausbildung des menschlichen Auges, eines Gesichtszuges oder dgl. auch auf die Identität und in weiterer Folge auf die jeweilige Autorisierung einer Person automatisch Rückschluss gezogen werden.

Von besonderem Vorteil ist auch die Ausgestaltung nach Anspruch 25, da ein derartiger Anwesenheitssensor baulich einfach ist und funktional relativ unkompliziert in den Steuerungsablauf der Steuerungseinrichtung integriert werden kann. Darüber hinaus ist ein für Bedienpersonen klar nachvollziehbares Umschaltkriterium gegeben, wodurch Verwirrungen bzw. Unklarheiten hinsichtlich der automatischen Umschaltung der Bildschirmdarstellung ausgeschlossen sind. Zudem kann mit diesen Maßnahmen der Komfort bzw. die Ergonomie für die jeweiligen Bedienpersonen erhöht werden.

Eine zuverlässige Erfassung von beweglichen bzw. ortsvariablen Objekten, insbesondere von Personen, kann durch die Ausgestaltung nach Anspruch 26 erzielt werden. Ein weiterer Vorteil liegt darin, dass durch die Anordnung mehrerer Lichtschranken in einfacher Art und Weise auch eine Bewegungsrichtung detektiert werden kann und gleichzeitig eine definierte Erfassungszone bzw. ein räumlicher begrenzter Erfassungsbereich bestimmt bzw. festgelegt werden kann.

Bei der Ausgestaltung nach Anspruch 27 ist von Vorteil, dass damit die Anwesenheit einer Bedienperson im Nahbereich des Bedienpanels automatisiert und im Wesentlichen berührungslos erfassbar ist. Weiters kann dadurch eine Kennung aus dem von der Person getragenen bzw. vorgewiesenen Transponder ausgelesen werden. Damit einhergehend können personelle Zuordnungen bzw. Identifikations- oder Autorisierungs-Überprüfungen in einfacher und zuverlässiger Art und Weise umgesetzt werden.

Von Vorteil ist auch eine Ausgestaltung nach Anspruch 28, da dadurch eine deutlich bewusstere Anmeldung im System erforderlich ist und eine ungewollte Umschaltung von Bildschirmdarstellungen vermieden wird. Dennoch ist mit einer derartigen Barcode-Lesevorrichtung und entsprechenden, von der Bedienperson zu tragenden Barcodes ein hoher Handlingkomfort erzielbar.

Von Vorteil sind auch die Maßnahmen nach Anspruch 29, da dadurch eine einfache Anpassung der Steuerungseinrichtung an die jeweiligen Umgebungsbedingungen bzw. Systemaufbauten ermöglicht ist. Insbesondere können dadurch Bereichsanpassungen vorgenommen werden bzw. können jene Zonen ausgeblendet werden, in welchen ein automatischer Wechsel der Bildschirmdarstellung unerwünscht wäre.

Schließlich ist eine Ausgestaltung nach Anspruch 30 von Vorteil, da dadurch von der jeweiligen Bedienperson eine besonders einfache und komfortable Anpassung des gewünschten Erfassungsverhaltens bzw. des optimal angesehenen Erfassungsbereiches in einfacher Art und Weise vorgenommen werden kann.

Zum besseren Verständnis der Erfindung wird diese anhand der nachfolgenden Figuren näher erläutert.

Es zeigen jeweils in stark schematisch vereinfachter Darstellung:
- Fig. 1: eine beispielhafte technische Einrichtung mit technischen Maßnahmen zur automatisch gesteuerten Umschaltung der visuell erfassbaren Darstellungen auf einem Bedienpanel der Steuerungseinrichtung;
- Fig. 2: ein beispielhaftes erstes Bildschirmlayout des Bedienpanels nach Fig. 1;
- Fig. 3: ein beispielhaftes zweites Bildschirmlayout des Bedienpanels nach Fig. 1;
- Fig. 4: diverse Vorrichtungen zur Erfassung der Anwesenheit bzw. Identität einer Person innerhalb der unmittelbaren Bedienbereiche von verschiedenen Bedienpanelen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

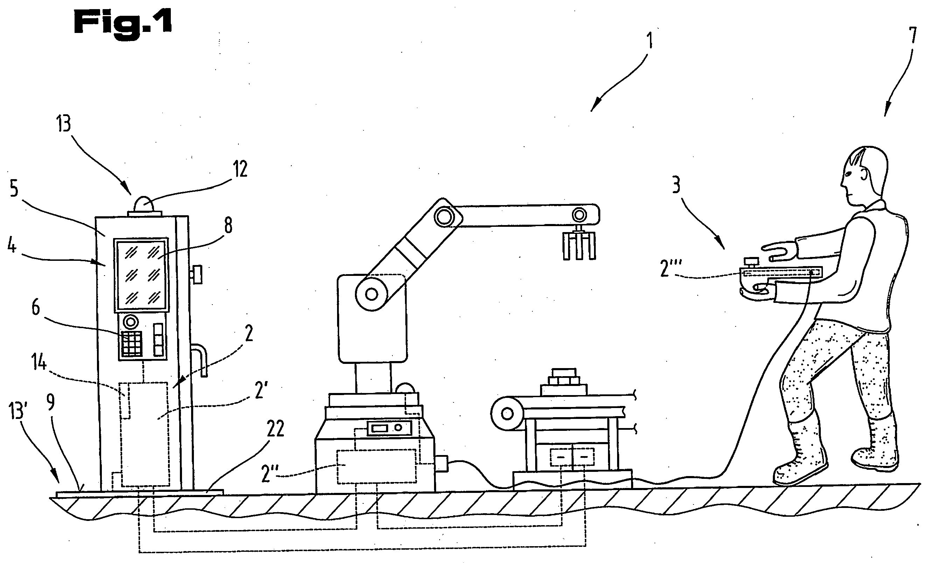

In Fig. 1 ist ein Ausführungsbeispiel einer elektrisch steuerbaren bzw. elektrotechnisch zu steuernden technischen Einrichtung 1 veranschaulicht. Diese technische Einrichtung 1 ist beispielsgemäß durch eine technische Anlage gebildet, welche zumindest eine Maschine und einen industriellen Roboter umfasst, um auf diese Weise einen Fertigungsprozess zumindest teilweise automatisiert auszuführen. Die technische Einrichtung 1 kann dabei beliebige Maschinen, Anlagen und Geräte umfassen, um technische Prozesse, insbesondere Fertigungsprozesse, chemische Prozesse oder dgl., zumindest teilweise automatisiert abwickeln zu können. Derartige Einrichtungen 1 können auch als industrielle Automatisierungsanlagen bezeichnet werden.

Die entsprechende technische Einrichtung 1 umfasst wenigstens eine signal- und datenverarbeitende Steuerungseinrichtung 2, welche aus einzelnen Steuerungseinheiten 2'-2'" zusammengesetzt sein kann. Die jeweilige Steuerungsarchitektur für die technische Einrichtung 1 kann dabei beliebige, aus dem Stand der Technik bekannte Topologien aufweisen. Insbesondere sind zentrale und dezentrale Steuerungsarchitekturen und beliebige Mischformen möglich. So ist es z.B. auch möglich, mobile Steuerungseinheiten 2"', insbesondere so genannte Handterminals 3 in die Steuerungseinrichtung 2 zu integrieren. Ebenso können willkürliche, signal- und datentechnische Vernetzungen zwischen den jeweiligen Steuerungseinheiten 2'-2"' vorgesehen sein.

Darüber hinaus ist wenigstens ein Bedienpanel 4 ausgebildet, welches mit der Steuerungseinrichtung 2 wirkungsverbunden ist bzw. mit zumindest einer Steuerungseinheit 2'-2'" der Steuerungseinrichtung 2 baulich kombiniert ist. Das Bedienpanel 4 kann dabei separat zur technischen Einrichtung 1 positioniert und beispielsweise an einem Schaltschrank 5, einem Bedienpult oder einer abgesetzt aufgestellten Steuerungskonsole ausgebildet sein. Im dargestellten Ausführungsbeispiel ist das Bedienpanel 4 in die Seiten- bzw. Frontwand des Schaltschrankes 5 eingebaut. Das heißt, dass das Bedienpanel 4 ortsfest positioniert ist und üblicherweise nicht für eine Repositionierung relativ zur technischen Einrichtung 1 vorgesehen ist.

Am Bedienpanel 4 bzw. in unmittelbarer Nähe des Bedienpanels 4 ist wenigstens ein Eingabemittel 6 ausgebildet, welches zur Abgabe von Steuerbefehlen an die technische Einrichtung 1 sowie zur Eingabe von Daten in die Steuerungseinrichtung 2 bzw. zum Abrufen oder Verändern von Informationen bzw. Daten ausgehend von einer Bedienperson 7 vorgesehen ist. Insbesondere ist eine Ein- und Ausgabe von Daten in Bezug auf die Steuerungseinrichtung 2 bzw. eine Veränderung der Betriebsweise der technischen Einrichtung 1 anhand der diversen Eingabemittel 6 ermöglicht.

Das Bedienpanel 4 umfasst weiters wenigstens ein grafikfähiges Ausgabemittel 8 zur Darstellung von Teilmengen von insgesamt verfügbaren bzw. notwendigen Informationen für die Bedienperson 7 der technischen Einrichtung 1. Das grafikfähige Ausgabemittel 8 dient insbesondere zur Ausgabe von Statusinformationen über den Betriebs- oder Prozesszustand der steuerbaren technischen Einrichtung 1. Neben einem grafkfähigen Ausgabemittel 8 können in an sich bekannter Art und Weise auch sonstige visuell erfassbare Ausgabemittel, wie z.B. Signalleuchten, Zeigerinstrumente und dgl. ausgebildet sein. Das Ausgabemittel 8 kann gemäß einer bevorzugten Ausführungsform auch durch einen berührungssensitiven Bildschirm, insbesondere durch einen Touch-Screen gebildet sein. Ein derartiger Touch-Screen vereint ein grafikfähiges Ausgabemittel 8 mit einem Eingabemittel 6 zur Beeinflussung der Betriebsweise der Steuerungseinrichtung 2 bzw. der technischen Einrichtung 1.

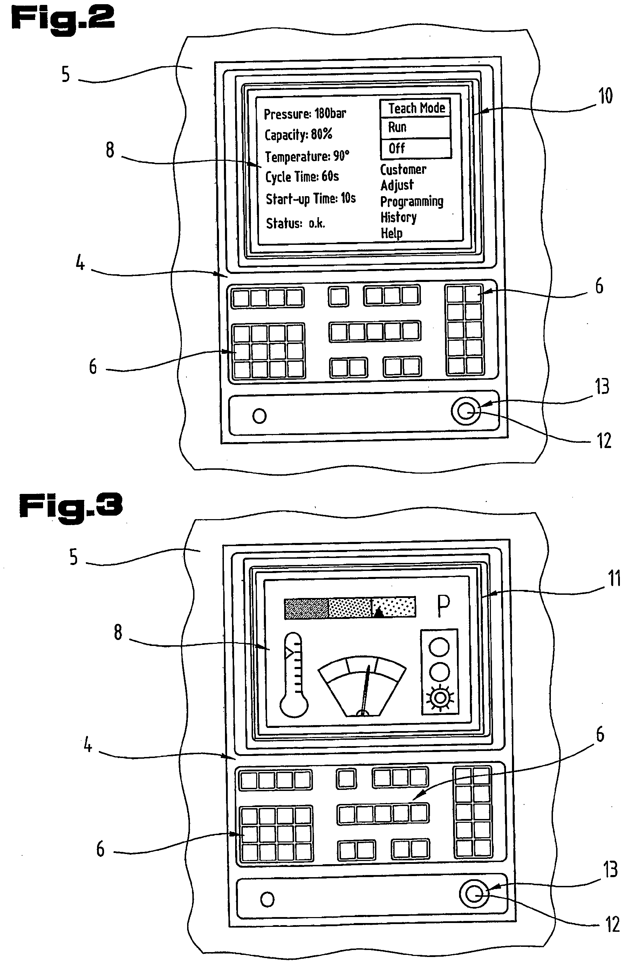

Eine Bedienung des Bedienpanels 4 bzw. von dessen Eingabemitteln 6 ist grundsätzlich nur innerhalb eines unmittelbaren Bedienbereiches 9 um das Bedienpanel 4 ergonomisch möglich. Insbesondere ist innerhalb dieses räumlich begrenzten Bedienbereiches 9, welcher dem nahen Umfeld um den Aufstellungsort des Bedienpanels 4 entspricht, eine Zugreifbarkeit auf die Eingabemittel 6 des Bedienpanels 4 gegeben. Innerhalb dieses Bedienbereiches 9 können außerdem sämtliche am Ausgabemittel 8 des Bedienpanels 4 grafisch ausgebbaren Informationen von einer Bedienperson 7 visuell erfasst bzw. gelesen werden. Außerhalb des Bedienbereiches 9 um das Bedienpanel 4 ist eine Bedienung der Eingabemittel 6 nicht mehr ermöglicht und eine Einsehbarkeit bzw. Lesbarkeit aller verfügbaren Informationen des Ausgabemittels 8 nur schwer möglich bzw. nicht mehr ermöglicht. Wesentlich ist, dass die Steuerungseinrichtung 2, welche eine oder mehrere Steuerungseinheiten 2'-2'" umfasst, wenigstens ein erstes Bildschirmlayout 10 bereitstellt, welches für die Darstellung einer definierten Teilmenge von insgesamt vorliegenden Informationen bzw. Daten am grafikfähigen Ausgabemittel 8 ausgebildet ist. Ein beispielhaftes, erstes Bildschirmlayout mit einer Darstellung einer beispielhaften, ersten Teilmenge von Informationen ist in Fig. 2 schematisch veranschaulicht.

Die Steuerungseinrichtung 2, insbesondere wenigstens eine der Steuerungseinheiten 2'-2'" ist weiters zur Bereitstellung von zumindest einem zweiten Bildschirmlayout 11 ausgebildet. Dieses zweite Bildschirmlayout 11 ist für die Darstellung einer definierten, zweiten Teilmenge von insgesamt verfügbaren Informationen am grafikfähigen Ausgabemittel 8 eingerichtet bzw. ausgebildet, wie dies in Fig. 3 schematisch und beispielhaft dargestellt wurde. Dieses zweite Bildschirmlayout 11 ist jedenfalls für eine Darstellung einer zweiten, hinsichtlich des Informationsumfanges üblicherweise reduzierten Teilmenge von Informationen am grafikfähigen Ausgabemittel 8 konzipiert und für eine Betrachtung ausgehend von einer vergleichsweise größeren Entfernung zum grafikfähigen Ausgabemittel 8 vorgesehen. Insbesondere ist das zweite Bildschirmlayout 11 für eine Inaugenscheinnahme durch eine Bedienperson 7 ausgehend von Umgebungsbereichen vorgesehen, welche außerhalb des unmittelbaren Bedienbereiches 9 des Bedienpanels 4 oder technischen Einrichtung 1 liegen. Das zweite Bildschirmlayout 11 umfasst bevorzugt weniger detaillierte Informationen bzw. vergleichsweise größere Darstellungen am grafikfähigen Ausgabemittel 8, um eine Betrachtung bzw. Lesbarkeit auch aus größeren Entfernungen, insbesondere aus Entfernungen deutlich abseits des unmittelbaren Bedienbereiches 9 zu ermöglichen. Diese außerhalb des unmittelbaren Bedienbereiches 9 liegenden Umgebungsbereiche können beispielsweise durch den Ort der jeweiligen Werkstückmanipulation bzw. Produktbearbeitung innerhalb der technischen Einrichtung 1 oder durch Gangabschnitte zwischen technischen Einrichtungen 1 gebildet sein, welche Gangabschnitte von zumindest einer Person bzw. Bedienperson 7 regelmäßig oder sporadisch beschritten werden.

In diesem Zusammenhang ist es wesentlich, dass weiters eine automatisierte Erfassung des Vorliegens oder Nichtvorliegens einer Personenanwesenheit im unmittelbaren Bedienbereich 9 des Bedienpanels 4 vorgenommen wird. Insbesondere wird eine automatisierte Erfassung der Anwesenheit und/oder Nichtanwesenheit einer allgemeinen Person bzw. einer autorisierten Bedienperson 7 im unmittelbaren Bedienbereich 9 des Bedienpanels 4 oder der technischen Einrichtung 1 via die Steuerungseinrichtung 2 der technischen Einrichtung 1 bzw. via das Bedienpanel 4 durchgeführt. Diese automatisierte Erfassung der Anwesenheit bzw. Nichtanwesenheit einer Person bzw. Bedienperson 7 im unmittelbaren Bedienbereich 9 des Bedienpanels 4 erfolgt mittels wenigstens einem Anwesenheitssensor 12, welcher mit der Steuerungseinrichtung 2 bzw. mit dem Bedienpanel 4 wirkungsverbunden ist. Vorteilhafte Ausführungsformen bzw. Funktionsweisen eines derartigen Anwesenheitssensors 12 werden im Nachfolgenden beschrieben.

Wesentlich ist weiters, dass eine automatisierte Umschaltung zwischen dem ersten und zweiten Bildschirmlayout 10, 11 anhand des festgestellten Zustandes bezüglich der Anwesenheit bzw. Nichtanwesenheit einer Person bzw. Bedienperson 7 im unmittelbaren Bedienbereich des Bedienpanels 4 erfolgt. Diese automatisierte Umschaltung wird mittels der Steuerungseinrichtung 2 bewerkstelligt bzw. vom Anwesenheitssensor 12 initiiert bzw. vorgenommen. Die automatische Umschaltung kann aber auch von der Anwesenheit bzw. Nichtanwesenheit einer Person im Umfeld der technischen Einrichtung 1 abhängig gemacht werden.

Der Steuerungsablauf ist dabei derart, dass bei festgestellter Anwesenheit einer Person im unmittelbaren Bedienbereich 9 des Bedienpanels 4 auf das erste Bildschirmlayout 10 umgeschaltet wird bzw. dass in diesem Fall das erste Bildschirmlayout 10 aktiviert wird. Gemäß einer vorteilhaften Weiterbildung erfolgt diese Umschaltung auf das erste, relativ detailreiche Bildschirmlayout 10 dann, wenn von der Steuerungseinrichtung 2 eine zur Bedienung der technischen Einrichtung 1 oder der Steuerungseinheiten 2'-2"' autorisierte, das heißt für technische Manipulationen befugte Bedienperson 7 im unmittelbaren Bedienbereich 9 des Bedienpanels 4 erkannt wird. Diese automatisierte Aktivierung des ersten Bildschirmlayouts 10 ermöglicht es einer befugten Bedienperson 7, einen komfortablen und vergleichsweise raschen Einblick in die diversen Parameter bzw. Statusinformationen der technischen Einrichtung 1 zu erlangen. Gegebenenfalls kann dabei auch eine automatisierte Freischaltung von Bedienmöglichkeiten mit erhöhten Sicherheitsanforderungen erfolgen bzw. eine automatisierte Freischaltung von Zugriffsrechten, welche nur von bestimmten, autorisierten Bedienpersonen 7 in Anspruch genommen werden sollen, selbsttätig eingeleitet werden.

Demgegenüber wird bei festgestellter Nichtanwesenheit einer Person bzw. Bedienperson 7 im unmittelbaren Bedienbereich 9 des Bedienpanels 4 das zweite Bildschirmlayout 11 aktiviert. Auch diese Aktivierung bzw. Umschaltung auf das zweite Bildschirmlayout 11 erfolgt bevorzugt vollautomatisch. Das heißt, dass keinerlei manuelle Bedienhandlungen erforderlich sind, um beim Verlassen des unmittelbaren Bedienbereiches 9 des Bedienpanels 4 das zweite Bildschirmlayout 11, welches für eine Lesbarkeit bzw. Erfassbarkeit von relevanten bzw. interessierenden Teilmengen von Informationen aus einer größeren Entfernung geeignet ist, zu aktivieren. Unachtsamkeiten oder Vergesslichkeiten der Bedienperson 7 können somit nicht zu Einbußen an einer möglichsten hohen Verfügbarkeit oder Störungsfreiheit der technischen Einrichtung 1 bzw. nicht zu unerwünschten Sicherheitsdefiziten der technischen Einrichtung 1 führen.

Der Anwesenheitssensor 12 zur Erfassung der Anwesenheit und/oder Nichtanwesenheit einer Person, insbesondere einer Bedienperson 7 kann baulich separat ausgebildet oder als integraler Bestandteil der Steuerungseinrichtung 2 ausgeführt sein. Insbesondere kann der Anwesenheitssensor 12 derart implementiert sein, dass bei Betätigung eines Eingabemittels 6 des Bedienpanels 4 auf die Anwesenheit einer Bedienperson 7 innerhalb des Bedienbereiches 9 Rückschluss gezogen wird. Der Anwesenheitssensor 12 kann folglich hardwaretechnische Komponenten umfassen und/oder rein softwaretechnisch ausgeführt sein.

Analog dazu ist es möglich, die Nichtanwesenheit einer Bedienperson 7 beim Bedienpanel 4 dadurch festzustellen, dass an den Eingabemitteln 6 des Bedienpanels 4 während einer festgesetzten Zeitspanne jegliche oder bestimmte Bedienhandlungen ausbleiben. Insbesondere kann von einer Nichtanwesenheit einer Bedienperson 7 ausgegangen werden, wenn beispielsweise während einer Zeitspanne in etwa 1 min an den Eingabemitteln 6 keinerlei Betätigung erfolgt. Bevorzugt ist diese festgesetzte, erste Zeitspanne individuell einstellbar. Insbesondere kann diese Zeitspanne für den logischen Rückschluss auf eine Nichtanwesenheit einer Bedienperson 7 innerhalb eines Bereiches von 30 sec bis max. 5 min einstellbar sein. Dadurch kann den jeweiligen Bedingungen bzw. den jeweils erforderlichen Bedienhandlungen an der technischen Einrichtung 1 für eine Vielzahl von Situationen entsprechend Rechnung getragen werden. Gemäß einer vorteilhaften Weiterbildung kann die automatische Umschaltung zwischen der ersten und der zweiten Darstellungsform, insbesondere zwischen dem ersten und dem zweiten Bildschirmlayout 10, 11 durch eine vorbestimmte Bedienhandlung oder Parametereinstellung am Bedienpanel 4 deaktiviert werden. Insbesondere kann eine benutzerseitige Inaktivschaltung der automatischen Displayumschaltung vorgesehen sein. Diese benutzerbewusst durchzuführende Deaktivierung bewirkt, dass das erste oder das zweite Bildschirmlayout 10, 11 unabhängig von der Anwesenheit oder Nichtanwesenheit einer Person dauerhaft eingeschaltet bleibt. Dadurch können z.B. Wartungs- bzw. Installationsarbeiten oder Programmiertätigkeiten einfacher bzw. rascher und komfortabler durchgeführt werden.

Gemäß einer zweckmäßigen Weiterbildung kann auch vorgesehen sein, dass nach Ablauf einer zweiten Zeitspanne, innerhalb welcher fortwährend eine Nichtanwesenheit von Personen festgestellt wird, ein Bildschirm, insbesondere ein LCD (Liquid Crystal Display) des grafikfähigen Ausgabemittels 8 dunkel geschaltet oder abgeschaltet wird. Bei einer nachfolgend automatisiert festgestellten Anwesenheit einer Person bzw. Bedienperson 7 im Bedienbereich 9 des Bedienpanels 4 wird das erste Bildschirmlayout 10 automatisch wieder hergestellt bzw. angezeigt. Ebenso kann bei festgestellter Anwesenheit einer Person innerhalb eines definierten Umgebungsbereiches um die technische Einrichtung 1 das zweite Bildschirmlayout 11, welches für eine Betrachtung aus größerer Entfernung geeignet ist, wieder aktiviert, d.h. am Bildschirm des Bedienpanels 4 ausgegeben werden. Gemäß einer optionalen Weiterbildung können während oder unmittelbar nach dem Dunkelschalten oder Abschalten des Bildschirms im Bedienpanel 4 auch diverse Hardwarekomponenten, welche für die Ausgabe von Informationen auf dem Bildschirm erforderlich sind, abgeschaltet oder in einen Stromsparmodus versetzt werden. Die dadurch erzielbaren Energieeinsparungen wirken sich vorteilhaft auf die Umwelt aus und ist außerdem eine unnötige Ablenkung von im Umgebungsbereich der Einrichtung 1 tätigen Personen vermieden. Darüber hinaus können Reizüberflutungen aufgrund von zahlreichen, zum Teil irrelevanten Informationen, welche auf Personen im Umfeld der technischen Einrichtung 1 üblicherweise einfließen, mit dieser Maßnahme in einfacher und effektiver Art und Weise vermieden werden.

Alternativ oder in Kombination zu einer Erfassung von Bedienhandlungen an einem der Eingabemittel 6 ist es also auch möglich, die Anwesenheit oder Nichtanwesenheit einer Person innerhalb des unmittelbaren Bedienbereiches 9 mittels einem Signal oder einer Zustandsinformation des Anwesenheitssensors 12 festzustellen. Der Anwesenheitssensor 12 kann dabei als Näherungssensor ausgebildet sein, dessen Ausgangssignale bzw. Ausgangs-Schaltzustände von der Steuerungseinrichtung 2 verwertet bzw. ausgewertet werden.

Gemäß einer vorteilhaften Weiterbildung wird bei Betätigung eines vordefinierten Eingabemittels 6 des Bedienpanels 4 bzw. beim manuellen Aufruf einer Prüfroutine am Bedienpanel 4 eine Funktions- bzw. Plausibilitätsüberprüfung des Anwesenheitssensors 12 durchgeführt. Dabei kann auch eine Neueinstellung bzw. Anpassung der Betriebsparameter des Anwesenheitssensors 12 erfolgen. Insbesondere kann in diesem Zusammenhang die Empfindlichkeit bzw. der räumliche Erfassungsbereich des Anwesenheitssensors 12 verändert bzw. neu justiert werden.

Unabhängig davon kann eine automatisierte Funktionsüberprüfung der Erfassungsvorrichtung 13 bzw. des Anwesenheitssensors 12 auch wie folgt erfolgen: Bei Betätigung irgendeines der Eingabemittel 6 am Bedienpanel 4 kann von der Steuerungseinrichtung 2 grundsätzlich von einer Anwesenheit einer Person im unmittelbaren Nahbereich des Bedienpanels 4 ausgegangen werden. Der Anwesenheitssensor 12 sollte also gleichzeitig die Anwesenheit einer Person signalisieren. Passiert dies nicht, ist der Anwesenheitssensor 12 bzw. die Erfassungsvorrichtung 13 entweder defekt oder unpassend eingestellt, sodass die Anzeige einer Störungsmeldung bzw. eine Aufforderung zur Justierung erfolgt. Alternativ oder in Kombination dazu kann eine automatische Umschaltung auf ein sinnvolles alternatives Betriebsverhalten vorgenommen werden bzw. ist die Erfassungsempfindlichkeit entsprechend anzupassen. Dies kann ebenso automatisch und von der Bedienperson 7 unbemerkt erfolgen.

Der Anwesenheitssensor 12 kann als Bestandteil bzw. Funktionskomponente einer Erfassungsvorrichtung 13 bezeichnet werden, welche zur Bestimmung der Anwesenheit und/oder Nichtanwesenheit einer Person bzw. Bedienperson 7 im unmittelbaren Bedienbereich 9 des Bedienpanels 4 ausgebildet ist. Diese Erfassungsvorrichtung 13 kann dabei in die Steuerungseinrichtung 2, insbesondere in eine der Steuerungseinheiten 2'-2"' funktional integriert sein oder auch baulich eigenständig ausgeführt und mit der Steuerungseinrichtung 2 bzw. direkt mit dem Bedienpanel 4 wirkungsverbunden sein. Die jeweiligen Detektierungsergebnisse der Erfassungsvorrichtung 13 werden herangezogen, um eine automatisierte Umschaltung zwischen wenigstens einem ersten Bildschirmlayout 10 für eine Betrachtung aus der Nähe und wenigstens einem zweiten Bildschirmlayout 11 für eine Betrachtung aus größerer Entfernung zu veranlassen. Insbesondere ist das erste Bildschirmlayout 10 primär für eine Betrachtung aus dem unmittelbaren Bedienbereich 9 vorgesehen, wohingegen das zweite Bildschirmlayout 11 für eine Betrachtung aus einer vergleichsweise größeren Entfernung, insbesondere für eine Betrachtung ausgehend von Bereichen außerhalb des unmittelbaren Bedienbereiches 9 vorgesehen ist. Von der Steuerungseinrichtung 2, insbesondere von einer der Steuerungseinheiten 2'-2"' ist dabei das erste Bildschirmlayout 10 zur Erstellung einer ersten Bildschirmdarstellung, welche eine erste Teilmenge von insgesamt verfügbaren Informationen umfassen soll, aus einem Speicher 14, insbesondere aus einem elektronischen oder magnetischen Datenspeicher abrufbar.

Die durch entsprechende Programmierung vorgegebene, erste Bildschirmdarstellung bzw. das dementsprechende erste Bildschirmlayout 10 ist für eine Betrachtung von Informationen bzw. Statusmeldungen innerhalb des unmittelbaren Nahbereiches zum Bedienpanel 4 vorgesehen. Insbesondere wird das erste Bildschirmlayout 10 von der Steuerungseinrichtung 2 derart generiert, dass es innerhalb des Bedienbereiches 9 des Bedienpanels 4 für eine Bedienperson 7 lesbar bzw. visuell erfassbar ist. Diese erste Bildschirmdarstellung enthält dabei jene Informationen, welche für eine Inaugenscheinnahme durch eine Bedienperson 7 zweckmäßig sind.

Wesentlich ist, dass von der Steuerungseinrichtung 2, insbesondere von zumindest einer der Steuerungseinheiten 2'-2'" zusätzlich wenigstens ein zweites Bildschirmlayout 11 zur Generierung wenigstens einer zweiten Bildschirmdarstellung aufrufbar ist. Dieses zweite Bildschirmlayout 11 ist für die Darstellung einer zweiten Teilmenge von insgesamt verfügbaren Informationen vorgesehen. Die Aufbauform bzw. die strukturellen Vorgaben für das zweite Bildschirmlayout 11 sind von der Steuerungseinrichtung 2 bzw. von zumindest einer der Steuerungseinheiten 2'-2'" aus einem elektronisch verwaltbaren Speicher 14 für Daten bzw. Programme abrufbar. Diese zweite Bildschirmdarstellung bzw. dieses zweite Bildschirmlayout 11 ist dabei für eine Betrachtung ausgehend von größeren Entfernungen vorgesehen. Insbesondere ist eine optimierte Inaugenscheinnahme der jeweiligen Bildschirmdarstellungen ausgehend von Bereichen außerhalb des unmittelbaren Bedienbereiches 9 des Bedienpanels 4 bzw. der technischen Einrichtung 1 vorgesehen. Wesentlich ist, dass in Abhängigkeit von einem Erfassungsergebnis bzw. Erfassungswert oder basierend auf einem Ausgangssignal der Erfassungsvorrichtung 13 eine automatisierte Umschaltung zwischen der ersten und zweiten Bildschirmdarstellung 10, 11 - und umgekehrt - erfolgt. Insbesondere wird bei festgestellter Anwesenheit einer Person, insbesondere einer Bedienperson 7, im unmittelbaren Bedienbereich 9 des Bedienpanels 4 eine Informationsausgabe am grafikfähigen Ausgabemittel 8 des Bedienpanels 4 entsprechend dem ersten Bildschirmlayout 10 vorgenommen. Dem gegenüber wird bei festgestellter Nichtanwesenheit einer Person, insbesondere einer Bedienperson 7, innerhalb des unmittelbaren Bedienbereiches 9 des Bedienpanels 4 eine Informationsausgabe am grafikfähigen Ausgabemittel 8 entsprechend dem zweiten Bildschirmlayout 11 ausgeführt. Dadurch kann eine relativ komfortable Betrachtung und Überwachung von relevanten Statusinformationen über die technische Einrichtung 1 bzw. eine zuverlässige inhaltliche Erfassung der Bildschirmanzeige auch aus einer größeren Entfernung zum stationären Bedienpanel 4 relativ bequem erfolgen. Die aus einer größeren Entfernung noch lesbaren Bildschirminhalte sind dabei auf wesentliche Informationen, insbesondere auf systemkritische Informationen oder auf anderweitig interessierende Informationen, insbesondere auf Informationen bezüglich relevanter Einstellungsdaten der technischen Einrichtung 1 reduziert.

Die wenigstens einfach, gegebenenfalls auch mehrfach ausgeführte Erfassungsvorrichtung 13 ist bevorzugt innerhalb des Aufstellungsbereiches der technischen Einrichtung 1 angeordnet und umfasst wenigstens einen Anwesenheitssensor 12, welcher zur Detektierung der Anwesenheit von Personen, insbesondere von Bedienpersonen 7 im Nahbereich des Bedienpanels 4 ausgebildet ist. Dieser Anwesenheitssensor 12 kann dabei durch beliebige aus dem Stand der Technik bekannten Sensoren bzw. Maßnahmen gebildet sein, um auf die Anwesenheit einer Person innerhalb eines definierten Bereiches, insbesondere innerhalb des Bedienbereiches 9, automatisiert Rückschluss ziehen zu können.

Zur Filterung von Störsignalen bzw. zur Vermeidung von unerwünschten Umschaltvorgängen können in der Steuerungseinrichtung 2 und/oder in der Erfassungsvorrichtung 13 softwaretechnische Filtermittel implementiert sein. Diese Maßnahmen sollen eine zuverlässige bzw. störungsfreie Auswertung eines Ausgangssignals oder eines Ergebniswertes des Anwesenheitssensors 12 gewährleisten. Günstig ist es, wenn der Anwesenheitssensor 12 eine definierte Ansprechhysterese mit einer oberen und einer unteren Schaltschwelle aufweist.

Wie am besten durch einen Vergleich der Fig. 2 und 3 ersichtlich ist, umfasst das erste Bildschirmlayout 10 eine bestimmte Teilmenge von insgesamt verfügbaren Informationen über die technische Einrichtung 1. Diese erste Teilmenge von Informationen besitzt einen relativ hohen Detaillierungsgrad bzw. eine relativ hohe Informationsdichte. Insbesondere ist das erste Bildschirmlayout 10 für eine Bildschirmausgabe mit einer vergleichsweise hohen Darstellungs- bzw. Informationstiefe vorgesehen, um damit beispielsweise eingehende Statusüberprüfungen bzw. Verzweigungen innerhalb eines Programm-Menüs ausführen zu können und/oder Programmiertätigkeiten bezüglich der technischen Einrichtung 1 einleiten zu können. Das heißt, dass im ersten Bildschirmlayout 10 beispielsweise eine Vielzahl von Parameterwerten bezüglich der technischen Einrichtung 1 ablesbar und/oder einstellbar ist. Zudem können im ersten Bildschirmlayout 10 eine Mehrzahl von Einstellungs-Menüs bzw. Programm-Menüs vorhanden sein, mit welchen in verschiedenste Untermenüs verzweigt werden kann.

Das zweite Bildschirmlayout 11 zeigt primär die wesentlichsten Informationen, welche für eine Einsichtnahme aus größerer Entfernung für eine Bedienperson 7 nützlich bzw. relevant sein können. Insbesondere können dies systemrelevante Statusinformationen über den Betriebs- oder Prozesszustand der steuerbaren, technischen Einrichtung 1 sein. Das zweite Bildschirmlayout 11 umfasst also Informationen, welche für eine fortwährende oder periodische Inaugenscheinnahme durch eine Bedienperson 7 vorgesehen sind. Diese Informationen können von fertigungs- bzw. produktspezifischem Charakter und/oder von systemrelevantem Charakter betreffend die technische Einrichtung 1 sein. Insbesondere können für das zweite Bildschirmlayout 11 relevante Temperatur- oder Druckwerte, diverse Statusanzeigen wie z.B. Ampelsymbole, diverse Fortschrittsanzeigen wie z.B. Balkendiagramme, Anzeigeskalen mit Zeigerdarstellung oder Wertedarstellung und dgl. vorgesehen sein. Die jeweilige Darstellungsart und Zeichengröße ist dabei derart gewählt, dass die jeweiligen Informationen auch aus größerer Entfernung abseits des unmittelbaren Bedienbereiches 9 visuell erfasst werden können. Demnach ist es teilweise so, dass das erste Bildschirmlayout 10, welches für die Darstellung von Detailinformationen vorgesehen ist, überwiegend kleinere Zeichengrößen und/oder kleinere Grafiken verwendet, als das zweite Bildschirmlayout 11, welches nur einen Auszug von systemrelevanten bzw. anderweitig interessierenden Informationen zeigt und somit vergleichsweise größere Darstellungen am Bildschirm des Bedienpanels 4 ermöglicht.

Gemäß einer vorteilhaften Weiterbildung kann die Erfassungsvorrichtung 13 zusätzlich oder unabhängig von der Erfassung von Informationen über die körperliche Anwesenheit oder Nichtanwesenheit einer Person auch zur Erfassung von Informationen über die Identität oder Autorisierung der jeweiligen Person vorgesehen sein. Die Erfassungsvorrichtung 13 kann somit derart ausgebildet sein, dass sie zwischen allgemeinen Personen und befugten bzw. autorisierten Bedienpersonen 7 unterscheiden kann. Insbesondere dann, wenn von der Erfassungsvorrichtung 13 auch die Identität bzw. eine Autorisierung einer im Umfeld der technischen Einrichtung 1 detektierten Person erfasst bzw. ermittelt wird, kann zwischen einer allgemeinen bzw. unspezifischen Person und einer befugten Bedienperson 7, welche zur Veränderung von Einstellungen an der technischen Einrichtung 1 und/oder zur Einsichtnahme von bestimmten Informationen befugt ist, automatisiert unterschieden werden. Vor allem kann die selbsttätige Umschaltung zwischen dem zweiten, relativ überblicksartigen Bildschirmlayout 11 und dem ersten, relativ detailreichen Bildschirmlayout 10 unter der Bedingung erfolgen, dass die detektierte Person von der Erfassungseinrichtung 13 als autorisierte Bedienperson 7 erkannt wurde. Wenn bei dieser automatischen Ermittlung der Autorisierung bzw. Identität der Person festgestellt wird, dass die detektierte Person auch entsprechende Administratorrechte für die jeweilige technische Einrichtung 1 besitzt, so wird beim Eintritt dieser Bedienperson 7 in den Bedienbereich 9 automatisch auf das erste Bildschirmlayout 10 umgeschaltet, welches sodann eine Einsichtnahme in die entsprechenden Detailinformationen bzw. eine Veränderung systemkritischer oder systemrelevanter Einstellungen in einfacher bzw. komfortabler Art und Weise ermöglicht.

Um diese Personenidentifikation oder Autorisierungsüberprüfung von Personen bewerkstelligen zu können, umfasst die Erfassungsvorrichtung 13 eine Lesevorrichtung 15 für berührungslos erfassbare Informationsträger 16. Die Lesevorrichtung 15 zur Personenidentifikation bzw. zur Überprüfung der Autorisierung von Personen kann selbstverständlich auch eigenständig bzw. unabhängig von der Erfassungsvorrichtung 13 ausgebildet sein. Die berührungslos erfassbaren Informationsträger 16, welche der autorisierten Bedienperson 7 zugeordnet sind, insbesondere von dieser getragen werden, können z.B. durch Transponder, Barcodes, RFID-Etiketten oder dgl. gebildet sein. Am Informationsträger 16 sind dabei die jeweiligen Berechtigungsdaten und/oder Identifikationsdaten des jeweiligen Trägers des Informationsträgers 16 hinterlegt. Alternativ dazu kann am Informationsträger 16 auch eine Kennung hinterlegt sein, welche quasi als "Pointer" für einen entsprechenden Datensatz gilt, welcher von der Steuerungseinrichtung 2 abruf- und auswertbar ist. Günstig ist es dabei, wenn diese berührungslos erfassbaren Informationsträger 16 von der autorisierten Bedienperson 7 derart getragen werden, dass bei entsprechender Annäherung zur Erfassungsvorrichtung 13 bzw. zu deren Lesevorrichtung 15 eine selbsttätige bzw. automatisierte Erfassung der jeweils hinterlegten Informationen bzw. Daten erfolgt. Das heißt, dass auch die Erfassungsreichweite des Informationsträgers 16 bzw. die Erfassungsempfindlichkeit der Erfassungsvorrichtung 13, insbesondere der Lesevorrichtung 15, zur Begrenzung bzw. zur Definition des Bedienbereiches 9 herangezogen werden kann. Insbesondere kann die Erfassungsreichweite bzw. Erfassungsempfindlichkeit zwischen der Lesevorrichtung 15 und dem Informationsträger 16 eine Bedingung oder ein Kriterium bezüglich der automatisierten Umschaltung zwischen dem ersten und zweiten Bildschirmlayout 10, 11 - und vice versa - darstellen.

Alternativ zu einer Personenüberprüfung mittels einem rechnerunterstützt auswertbaren Informationsträger 16 ist es auch möglich, eine Personenidentifikation bzw. eine Autorisierungsüberprüfung von Personen mittels einer Kamera 17 bzw. einem bildgebenden Sensor 18, insbesondere einem CCD-Modul, und einer Software zur Bild- oder Objekterkennung durchzuführen. Diese Software wird dabei in der Erfassungsvorrichtung 13 ausgeführt bzw. in der Steuerungseinrichtung 2 abgearbeitet. Durch derartige Maßnahmen sind autorisierte Bedienpersonen 7 vom Tragen bzw. Verwenden von speziellen Informationsträgern 16 befreit. Insbesondere kann eine Autorisierungsüberprüfung von Personen alleinig anhand von unverkennbaren Merkmalen, wie z.B. Gesichtszügen, Iris-Ausbildungen, Fingerabdrücken oder anhand von sonstigen biometrischen Merkmalen vorgenommen werden.

Entsprechend den vorstehenden Ausführungen kann der Anwesenheitssensor 12 somit durch einen bildgebenden Sensor 18, insbesondere durch ein CCD-Modul oder durch eine Kamera 17 gebildet sein. Andererseits kann der Anwesenheitssensor 12 zur Erfassung der Anwesenheit einer autorisierten Bedienperson 7 auch durch eine Transponder-Lesevorrichtung 15 oder durch eine Barcode-Lesevorrichtung 15 gebildet sein.

Der Anwesenheitssensor 12 zur Erfassung von Personen im unmittelbaren Bedienbereich 9 des Bedienpanels 4 kann aber auch durch zumindest einen Infrarot-Näherungssensor 19 gebildet sein. Alternativ oder in Kombination dazu kann der Anwesenheitssensor 12 auch durch zumindest einen Ultraschall-Näherungssensor 20 umgesetzt bzw. ausgeführt sein. Die genannten Näherungssensoren 19, 20 sind vorzugsweise in unmittelbarer Nähe zum Bedienpanel 4 angeordnet und definieren mit ihrem jeweiligen Erfassungsbereich den unmittelbaren Bedienbereich 9 um das Bedienpanel 4 bzw. vor dem Bedienpanel 4. Das heißt, dass der Infrarot-Näherungssensor 19 bzw. der Ultraschall-Näherungssensor 20 mittels dem jeweiligen Erfassungsbereich den unmittelbaren Bedienbereich 9 definiert bzw. absteckt.

Der Anwesenheitssensor 12 zur automatisierten Detektierung, ob sich eine Person innerhalb des Bedienbereiches 9 vor dem Bedienpanel 4 aufhält, kann auch durch zumindest eine Lichtschranke 21 gebildet sein. Diese Lichtschranke 21 kann dabei als Reflexionslichtschranke oder als Einweg-Lichtschranke, bei welcher sich Sender und Empfänger gegenüberstehen, ausgebildet sein. Die Lichtschranke 21 kann auch zur Abstrahlung eines Lichtgitters bzw. Lichtvorhanges ausgebildet sein und daher mit mehreren Lichtstrahlen arbeiten. Insbesondere kann die Lichtschranke 21 eine bestimmte Fläche bzw. einen definierten Bedienbereich 9 bezüglich positionsveränderlicher Objekte überwachen, um so auf die Anwesenheit bzw. Nichtanwesenheit einer Bedienperson unmittelbar vor dem Bedienpanel 4 adäquate Rückschlüsse zu ziehen.

Gemäß einer vorteilhaften Ausführungsform kann der Anwesenheitssensor 12 auch durch eine gewichtssensitive Trittmatte 22 gebildet sein. Diese Trittmatte 22 ist vor dem Bedienpanel 4 positioniert und definiert den automatisiert zu überwachenden Bedienbereich 9. Insbesondere definiert die Flächenerstreckung und die Positionierung der gewichtsensitiven Trittmatte 22 den Bedienbereich 9, welcher für die automatisierte Umschaltung zwischen dem ersten Bildschirmlayout 10 und dem zweiten Bildschirmlayout 11 maßgeblich ist. Sobald eine Person bzw. eine Bedienperson 7 die Trittmatte 22 betritt, wird von der Steuerungseinrichtung 2 die Anwesenheit einer Person vor dem Bedienpanel 4 erkannt, woraufhin Bildschirmdarstellungen entsprechend dem ersten Bildschirmlayout 10 ausgegeben werden.

Für den Fall, dass die Trittmatte 22 unbelastet ist, werden hingegen grafische Darstellungen auf dem Bildschirm des Bedienpanels 4 entsprechend dem zweiten Bildschirmlayout 11 umgesetzt, dessen Darstellungen auch aus relativ großer Entfernung deutlich lesbar bzw. inhaltlich erfassbar sind. Die Ausbildung einer Trittmatte 22 ist von besonderem Vorteil, da dadurch für eine Person bzw. Bedienperson 7 das automatische Umschaltkriterium klar erkennbar ist und keinerlei Verwunderung bzw. Verwirrung im Hinblick auf die automatisiert wechselnden Bildschirmdarstellungen eintreten kann. Zudem kann die Anordnung einer elastisch nachgiebigen bzw. rutschhemmenden Trittmatte 22 vor dem Bedienpanel 4 für die Bedienperson 7 gesundheitsfördernd sein bzw. zu einem möglichst angenehmen Arbeitsumfeld beitragen. Darüber hinaus ist die Integration einer Trittmatte 22 in den Steuerungsablauf der Steuerungseinrichtung 2 bzw. des Bedienpanels 4 zwecks Erzielung eines automatisierten Bildschirm-Umschaltvorganges baulich relativ einfach und auch kostengünstig umzusetzen.

Die vorstehend beschriebenen Sensoriken bzw. Erfassungsmittel sind mit der Erfassungsvorrichtung 13 bzw. mit der Steuerungseinrichtung 2 oder direkt mit dem Bedienpanel 4 leitungsverbunden.

Zweckmäßig ist es, wenn die Steuerungseinrichtung 2, die Erfassungsvorrichtung 13 oder der Anwesenheitssensor 12 derart ausgebildet ist, dass eine Ansprechschwelle des Anwesenheitssensors 12, insbesondere die Entfernung für das Erkennen einer Anwesenheit einer Person individuell bzw. systemabhängig parametrierbar ist. Insbesondere soll die Sensibilität bzw. der Erfassungsbereich der Erfassungsvorrichtung 13 innerhalb eines bestimmten Einstellbereiches verändert bzw. eingestellt werden können.

Zudem kann es zweckmäßig sein, dass die Steuerungseinrichtung 2, die Erfassungsvorrichtung 13 oder der Anwesenheitssensor 12 derart ausgebildet ist, dass die Ansprechschwelle für einen automatisierten Umschaltvorgang parametrierbar ist. Ferner ist es vorteilhaft, wenn die Ansprechschwelle automatisiert angepasst werden kann, indem während der Betätigung eines Eingabemittels 6 des Bedienpanels 4 die Ansprechschwelle für die Umschaltung automatisch neu eingestellt wird. Insbesondere kann während der Betätigung eines Eingabemittels 6 des Bedienpanels 4 und des dabei festgestellten Ausgangssignals oder Ergebniswertes des Anwesenheitssensors 12 die Schaltschwelle bzw. Ansprechschwelle neu bestimmt bzw. neu justiert werden. Der Aufwand für Neueinstellungen oder für Anpassungen bzw. die hierfür erforderliche Einstellzeit kann dadurch deutlich reduziert werden und wird der insgesamt bereitgestellte Einstellkomfort dadurch wesentlich erhöht.

Eine der vorteilhaften Wirkungen des erfindungsgemäßen Verfahrens bzw. der erfindungsgemäßen Steuerungseinrichtung 2 liegt darin, dass die Bedienperson 7 einer Maschine die wichtigsten Prozess- und Maschineninformationen auch auf größere Entfernung zum Bedienpanel 4 noch gut erfassen kann. Die Umschaltung zwischen den Darstellungsformen erfolgt automatisch und ist an keine Bedienhandlung gebunden. Der Wechsel des Bildschirmlayouts erfolgt daher schnell und zuverlässig. Ferner ist in Bereichen, in denen z.B. Arbeitshandschuhe erforderlich sind, ein bequemer und rascher Arbeitsablauf erzielbar. Darüber hinaus wird keine Verschmutzung irgendwelcher Bedienelemente verursacht, nachdem keine besonderen Bedienhandlungen erforderlich sind, um die Bildschirmausgabe umzuschalten bzw. anzupassen.

Die Ausführungsbeispiele zeigen mögliche Ausführungsvarianten des erfindungsgemäßen Systems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Steuerungseinrichtung 2 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

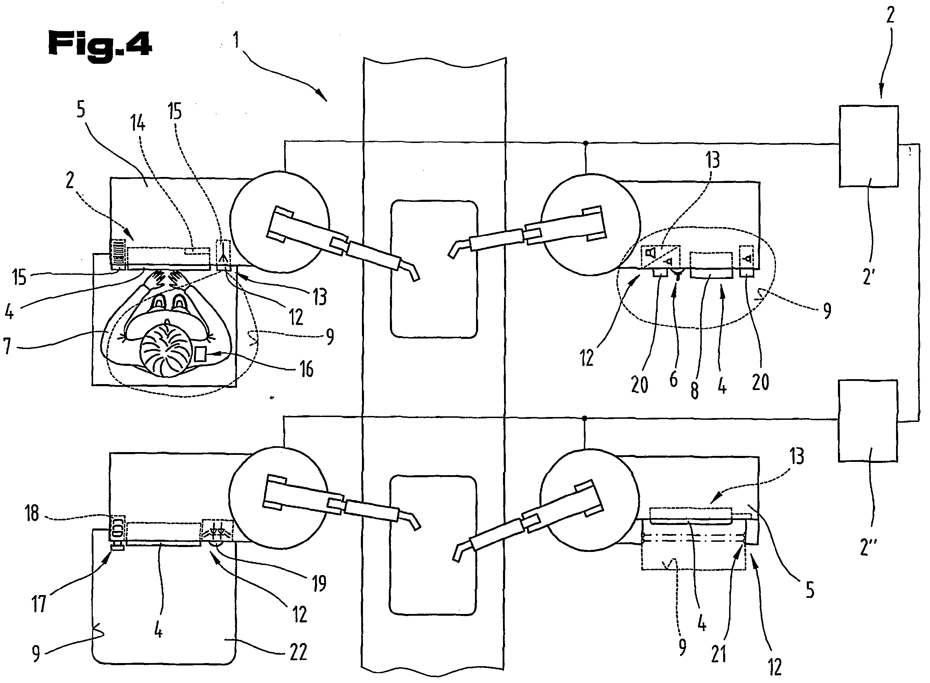

Vor allem können die einzelnen in den Fig. 1; 2, 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: technische Einrichtung
- 2: Steuerungseinrichtung
- 3: Handterminal
- 4: Bedienpanel
- 5: Schaltschrank
- 6: Eingabemittel
- 7: Bedienperson
- 8: Ausgabemittel
- 9: Bedienbereich
- 10: erstes Bildschirmlayout
- 11: zweites Bildschirmlayout
- 12: Anwesenheitssensor
- 13: Erfassungsvorrichtung
- 14: Speicher
- 15: Lesevorrichtung
- 16: Informationsträger
- 17: Kamera
- 18: bildgebender Sensor
- 19: Infrarot-Näherungssensor
- 20: Ultraschall-Näherungssensor
- 21: Lichtschranke
- 22: Trittmatte
- 23:
- 24:
- 25:

## Patentansprüche

1. Verfahren zum Betreiben einer elektrisch steuerbaren technischen Einrichtung (1), insbesondere einer Maschine, einer Anlage, eines Gerätes oder eines technischen Prozesses,
umfassend eine signal- und datenverarbeitende Steuerungseinrichtung (2), ein mit der Steuerungseinrichtung (2) wirkungsverbundenes und mit dieser baulich kombiniertes oder separat positioniertes Bedienpanel (4) mit Eingabemitteln (6) zur Abgabe von Steuerbefehlen an die technische Einrichtung (1) sowie zur Eingabe von Daten in die Steuerungseinrichtung (2) ausgehend von einer Bedienperson (7),
welches Bedienpanel (4) ein grafikfähiges Ausgabemittel (8) zur Darstellung von Teilmengen von insgesamt verfügbaren Informationen für eine Bedienperson (7), insbesondere von Statusinformationen über den Betriebs- oder Prozesszustand der steuerbaren technischen Einrichtung (1) umfasst, **gekennzeichnet, durch**
- Bereitstellung zumindest eines ersten Bildschirmlayouts (10), welches für die Darstellung einer ersten Teilmenge von Informationen am grafikfähigen Ausgabemittel (8) ausgebildet ist und für eine Betrachtung aus einem unmittelbaren Bedienbereich (9) des Bedienpanels (4) vorgesehen ist;
- Bereitstellung zumindest eines zweiten Bildschirmlayouts (11), welches für die Darstellung einer zweiten Teilmenge von Informationen am grafikfähigen Ausgabemittel (8) ausgebildet ist und für eine Betrachtung aus einer vergleichsweise größeren Entfernung, insbesondere von außerhalb eines unmittelbaren Bedienbereiches (9) des Bedienpanels (4) oder der technischen Einrichtung (1) vorgesehen ist;
- automatisierte Erfassung der Anwesenheit und/oder Nichtanwesenheit einer Person im unmittelbaren Bedienbereich (9) des Bedienpanels (4) oder der technischen Einrichtung (1); und
- automatisierte Umschaltung zwischen dem ersten und zweiten Bildschirmlayout (10, 11) anhand des festgestellten Zustandes betreffend die Anwesenheit und/oder Nichtanwesenheit einer Person im unmittelbaren Bedienbereich (9) des Bedienpanels (4) oder der technischen Einrichtung (1).

2. Verfahren nach Anspruch 1, **dadurch gekennzeichnet, dass** bei festgestellter Anwesenheit einer zur Bedienung der technischen Einrichtung (1) oder der Steuerungseinrichtung (2) autorisierten Bedienperson (7) im unmittelbaren Bedienbereich (9) des Bedienpanels (4) auf das erste Bildschirmlayout (10) umgeschaltet wird.

3. Verfahren nach Anspruch 1, **dadurch gekennzeichnet, dass** bei festgestellter Nichtanwesenheit einer Person im unmittelbaren Bedienbereich (9) des Bedienpanels (4) auf das zweite Bildschirmlayout (11) umgeschaltet wird.

4. Verfahren nach Anspruch 1, **dadurch gekennzeichnet, dass** zum Feststellen der Anwesenheit einer Bedienperson (7) die Betätigung eines Eingabemittels (6) des Bedienpanels (4) herangezogen wird.

5. Verfahren nach Anspruch 1, **dadurch gekennzeichnet, dass** zum Feststellen der Nichtanwesenheit einer Bedienperson (7) das Ausbleiben von Bedienhandlungen an den Eingabemitteln (6) des Bedienpanels (4) während einer festgesetzten ersten Zeitspanne herangezogen wird.

6. Verfahren nach Anspruch 5, **dadurch gekennzeichnet, dass** die festgesetzte erste Zeitspanne einstellbar ist.

7. Verfahren nach Anspruch 1, **dadurch gekennzeichnet, dass** zum Feststellen der Anwesenheit und/oder Nichtanwesenheit einer Person innerhalb des unmittelbaren Bedienbereiches (9) ein Signal oder eine Zustandsinformation eines Anwesenheitssensors (12), insbesondere eines Näherungssensors, ausgewertet wird.

8. Verfahren nach Anspruch 7, **dadurch gekennzeichnet, dass** bei Betätigung eines Eingabemittels (6) des Bedienpanels (4) eine Funktionsüberprüfung oder Plausibilitätsprüfung der Funktion des Anwesenheitssensors (12) durchgeführt wird.

9. Verfahren nach Anspruch 1, **dadurch gekennzeichnet, dass** die automatische Umschaltung zwischen dem ersten und dem zweiten Bildschirmlayout (10, 11) - und umgekehrt - bzw. der automatisch Wechsel zwischen der ersten und der zweiten Darstellungsform am grafischen Ausgabemittel (8) durch eine vorbestimmte Bedienhandlung oder Parametereinstellung deaktivierbar ist, sodass das erste oder zweite Bildschirmlayout (10, 11) unabhängig von der Anwesenheit oder Nichtanwesenheit einer Person dauerhaft eingestellt ist.

10. Verfahren nach Anspruch 1, **dadurch gekennzeichnet, dass** die erste Teilmenge von Informationen einen vergleichsweise höheren Detaillierungsgrad oder eine vergleichsweise höhere Darstellungs- oder Informationstiefe als die zweite Teilmenge von Informationen aufweist.

11. Verfahren nach Anspruch 1, **dadurch gekennzeichnet, dass** die zweite Teilmenge von Informationen durch eine Teilmenge der ersten Teilmenge von Informationen gebildet wird.

12. Verfahren nach Anspruch 1, **dadurch gekennzeichnet, dass** nach Ablauf einer zweiten Zeitspanne, innerhalb welcher fortwährend eine Nichtanwesenheit von Personen festgestellt wird, ein Bildschirm des grafikfähigen Ausgabemittels (8) automatisiert dunkel geschaltet oder abgeschaltet wird und bei nachfolgend festgestellter Anwesenheit einer Person innerhalb des Bedienbereiches (9) des Bedienpanels (4) oder innerhalb eines definierten Umgebungsbereiches um die technische Einrichtung (1) das erste respektive das zweite Bildschirmlayout (10, 11) automatisch wieder hergestellt wird.

13. Verfahren nach Anspruch 12, **dadurch gekennzeichnet, dass** während oder unmittelbar nach dem Dunkelschalten oder Abschalten des Bildschirms auch Hardwarekomponenten für die Ausgabe von Informationen auf dem Bildschirm abgeschaltet oder in einen Stromsparmodus versetzt werden.

14. Verfahren nach Anspruch 1, **dadurch gekennzeichnet, dass** neben der Erfassung von Informationen über die Anwesenheit einer Person auch Informationen über die Identität oder Autorisierung der jeweiligen Person gewonnen oder ermittelt werden.

15. Verfahren nach Anspruch 14, **dadurch gekennzeichnet, dass** eine Personenidentifikation oder eine Autorisierungsüberprüfung von Personen mittels einer Lesevorrichtung (15) für berührungslos erfassbare Informationsträger (16), wie z.B. Transponder, Barcodes, RFID-Etiketten oder dgl., durchgeführt wird.

16. Verfahren nach Anspruch 14, **dadurch gekennzeichnet, dass** eine Personenidentifikation oder eine Autorisierungsüberprüfung von Personen mittels einer Kamera (17) oder einem bildgebenden Sensor (18) und einer Software zur Bild- oder Objekterkennung durchgeführt wird.

17. Steuerungseinrichtung für eine elektrisch steuerbare technische Einrichtung (1), insbesondere eine Maschine, eine Anlage, ein Gerät oder einen technischen Prozess,
umfassend eine programmierbare Steuerungseinrichtung (2) und ein mit der Steuerungseinrichtung (2) wirkungsverbundenes Bedienpanel (4), welches mit der Steuerungseinrichtung (2) baulich kombiniert oder separat ausgebildet ist und Eingabemittel (6) zur Abgabe von Steuerbefehlen an die steuerbare technische Einrichtung (1) sowie zur Eingabe von Daten in die Steuerungseinrichtung (2) ausgehend von einer Bedienperson (7) aufweist, und
welches Bedienpanel (4) ein grafikfähiges Ausgabemittel (8) zur Darstellung von Teilmengen von insgesamt verfügbaren Informationen, insbesondere von Statusinformationen über den Betriebs- oder Prozesszustand der steuerbaren technischen Einrichtung (1) aufweist, welche Informationen für eine Inaugenscheinnahme durch eine Bedienperson (7) vorgesehen sind, und wobei
von der Steuerungseinrichtung (2) wenigstens ein erstes Bildschirmlayout (10) für eine erste Bildschirmdarstellung einer ersten Teilmenge von insgesamt verfügbaren Informationen aus einem Speicher (14) abrufbar ist und diese erste Bildschirmdarstellung für die Betrachtung von Informationen aus der unmittelbaren Nähe des Bedienpanels, insbesondere von innerhalb eines Bedienbereiches (9) des Bedienpanels (4) oder der technischen Einrichtung (1) vorgesehen ist, **dadurch gekennzeichnet, dass**
von der Steuerungseinrichtung (2) zusätzlich wenigstens ein zweites Bildschirmlayout (11) für eine zweite Bildschirmdarstellung einer Teilmenge von verfügbaren Informationen aus einem Speicher (14) abrufbar ist, wobei diese zweite Bildschirmdarstellung für eine Betrachtung aus größeren Entfernungen, insbesondere von außerhalb des unmittelbaren Bedienbereichs (9) des Bedienpanels (4) oder der technischen Einrichtung (1) vorgesehen ist,
dass eine mit der Steuerungseinrichtung (2) wirkungsverbundene oder eine in die Steuerungseinrichtung (2) funktional integrierte Erfassungsvorrichtung (13) zur Bestimmung der Anwesenheit und/oder Nichtanwesenheit einer Person im unmittelbaren Bedienbereich (9) des Bedienpanels (4) ausgebildet ist, und
dass in Abhängigkeit von einem Erfassungswert oder Ausgangssignal der Erfassungsvorrichtung (13) eine automatisierte Umschaltung zwischen dem ersten und zweiten Bildschirmlayout (10, 11) derart erfolgt, dass
bei festgestellter Anwesenheit einer Person im unmittelbaren Bedienbereich (9) des Bedienpanels (4) eine Informationsausgabe am grafikfähigen Ausgabemittel (8) des Bedienpanels (4) entsprechend dem ersten Bildschirmlayout (10) erfolgt, und dass
bei festgestellter Nichtanwesenheit einer Person im unmittelbaren Bedienbereich (9) des Bedienpanels (4) eine Informationsausgabe am grafikfähigen Ausgabemittel (8) entsprechend dem zweiten Bildschirmlayout (11) erfolgt.

18. Steuerungseinrichtung nach Anspruch 17, **dadurch gekennzeichnet, dass** die Steuerungseinrichtung (2) mit zumindest einer Erfassungsvorrichtung (13) zur Bestimmung der Anwesenheit oder Nichtanwesenheit einer zur Bedienung der technischen Einrichtung (1) oder der Steuerungseinrichtung (2) autorisierten Bedienperson (7) wirkungsverbunden oder mit zumindest einer derartigen Erfassungsvorrichtung (13) baulich kombiniert ist.

19. Steuerungseinrichtung nach Anspruch 17, **dadurch gekennzeichnet, dass** die Erfassungsvorrichtung (13) wenigstens einen Anwesenheitssensor (12) umfasst, welcher zur Detektierung der Anwesenheit von allgemeinen Personen oder von autorisierten Bedienpersonen (7) im Nahbereich des Bedienpanels (4) ausgebildet ist.

20. Steuerungseinrichtung nach Anspruch 19, **dadurch gekennzeichnet, dass** die Steuerungseinrichtung (2) oder die Erfassungsvorrichtung (13) zur Auswertung eines Ausgangssignals oder eines Ergebniswertes des Anwesenheitssensors (12) ausgebildet ist und der Anwesenheitssensor (12) eine Ansprechhysterese mit einer oberen und einer unteren Schaltschwelle aufweist.

21. Steuerungseinrichtung nach Anspruch 17, **dadurch gekennzeichnet, dass** das erste Bildschirmlayout (10) für die Darstellung der Informationen überwiegend kleinere Zeichengrößen und/oder Grafiken verwendet, als das zweite Bildschirmlayout (11).

22. Steuerungseinrichtung nach Anspruch 19, **dadurch gekennzeichnet, dass** der Anwesenheitssensor (12) zumindest ein Infrarot-Näherungssensor (19) ist.

23. Steuerungseinrichtung nach Anspruch 19, **dadurch gekennzeichnet, dass** der Anwesenheitssensor (12) zumindest ein Ultraschall-Näherungssensor (20) ist.

24. Steuerungseinrichtung nach Anspruch 19, **dadurch gekennzeichnet, dass** der Anwesenheitssensor (12) zumindest ein bildgebender Sensor (18), insbesondere ein CCD-Modul oder eine Kamera (17) ist.

25. Steuerungseinrichtung nach Anspruch 19, **dadurch gekennzeichnet, dass** der Anwesenheitssensor (12) zumindest eine gewichtssensitive Trittmatte (22) ist.

26. Steuerungseinrichtung nach Anspruch 19, **dadurch gekennzeichnet, dass** der Anwesenheitssensor (12) durch zumindest eine Lichtschranke (21) gebildet ist.

27. Steuerungseinrichtung nach Anspruch 19, **dadurch gekennzeichnet, dass** der Anwesenheitssensor (12) zumindest eine Transponder-Lesevorrichtung (15) ist.

28. Steuerungseinrichtung nach Anspruch 19, **dadurch gekennzeichnet, dass** der Anwesenheitssensor (12) zumindest eine Barcode-Lesevorrichtung (15) ist.

29. Steuerungseinrichtung nach Anspruch 17, 18 oder 19, **dadurch gekennzeichnet, dass** die Steuerungseinrichtung (2), die Erfassungsvorrichtung (13) oder der Anwesenheitssensor (12) derart ausgebildet ist, dass eine Ansprechschwelle des Anwesenheitssensors (12), insbesondere die Entfernung für das Erkennen der Anwesenheit einer Person, parametrierbar ist.

30. Steuerungseinrichtung nach Anspruch 29, **dadurch gekennzeichnet, dass** die Steuerungseinrichtung (2), die Erfassungsvorrichtung (13) oder der Anwesenheitssensor (12) derart ausgebildet ist, dass die Ansprechschwelle während der Betätigung eines Eingabemittels (6) des Bedienpanels (4) anhand des dabei festgestellten Ausgangssignals oder Ergebniswertes des Anwesenheitssensors (12) automatisiert angepasst ist.

## Claims

1. Method for operating an electrically controllable technical device (1), in particular a machine, an installation, a device or a technical process,
comprising a signal and data-processing control device (2), a control panel (4) operatively connected to the control device (2) and combined structurally with the latter or positioned separately and with input means (6) for the delivery of control commands to the technical device (1) as well as for the input of data into the control device (2) by an operator (7),
which control panel (4) comprises a graphical output means (8) for representing portions of all of the available information for an operator (7), in particular of status information on the operational or process status of the controllable, technical device (1), **characterised by**
- providing at least one first screen layout (10), which is designed for showing a first portion of information on the graphical output means (8) and is provided for viewing from an immediate operating area (9) of the control panel (4);
- providing at least one second screen layout (11), which is designed for showing a second portion of information on the graphical output means (8) and is provided for viewing from a comparatively large distance, in particular from outside an immediate operating area (9) of the operating panel (4) or the technical device (1);
- automated detection of the presence and/or absence of a person in the immediate operating area (9) of the operating panel (4) or the technical device (1); and
- automated switching between the first and second screen layout (10, 11) by way of the established status concerning the presence and/or absence of a person in the immediate operating area (9) of the operating panel (4) or the technical device (1).

2. Method according to claim 1, **characterised in that** having established the presence of an operator (7) who is authorised to operate the technical device (1) or the control device (2) in the immediate operating area (9) of the control panel (4) it is switched to the first screen layout (10).

3. Method according to claim 1, **characterised in that** having established the absence of a person in the immediate operating area (9) of the control panel (4) it is switched to the second screen layout (11).

4. Method according to claim 1, **characterised in that** to establish the presence of an operator (7) the activation of an input means (6) of the control panel (4) is established.

5. Method according to claim 1, **characterised in that** to establish the absence of an operator (7) the absence of operational actions on the input means (6) of the control panel (4) during a defined first time period is established.

6. Method according to claim 5, **characterised in that** the defined first time period can be adjusted.

7. Method according to claim 1, **characterised in that** to establish the presence and/or absence of a person within the immediate operating area (9) a signal or status information of a presence sensor (12), in particular a proximity sensor, is evaluated.

8. Method according to claim 7, **characterised in that** on activating an input means (6) of the control panel (4) a function check or plausibility check of the function of the presence sensor (12) is performed.

9. Method according to claim 1, **characterised in that** the automatic switching between the first and the second screen layout (10, 11) - and vice versa - or the automatic change between the first and the second format on the graphic output means (8) can be deactivated by a predefined operational action or parameter setting, so that the first or second screen layout (10, 11) is set permanently independently of the presence or absence of a person.

10. Method according to claim 1, **characterised in that** the first portion of information has a comparatively greater degree of detail or a comparatively greater format or information depth than the second portion of information.

11. Method according to claim 1, **characterised in that** the second portion of information is formed by a portion of the first portion of information.

12. Method according to claim 1, **characterised in that** after the expiry of a second time period, within which the absence of persons is continually determined, a screen of the graphical output means (8) is darkened or switched off automatically, and if subsequently the presence of a person is determined within the operating area (9) of the control panel (4) or within a defined surrounding area around the technical device (1) the first or second screen layout (10, 11) respectively is re-established automatically.

13. Method according to claim 12, **characterised in that** during or immediately after the darkening or switching off of the screen hardware components for the output of information on the screen are also switched off or put into a power saving mode.

14. Method according to claim 1, **characterised in that** in addition to determining information about the presence of a person also information can be obtained or determined about the identity or authorisation of the respective person.

15. Method according to claim 14, **characterised in that** a personal identification or authorisation check of persons is performed by means of a reading device (15) for contact-free determinable information carriers (16), such as e.g. transponders, barcodes, RFID-labels or the like.

16. Method according to claim 14, **characterised in that** a personal identification or authorisation check of persons is performed by means of a camera (17) or an imaging sensor (18) and software for image or object identification.

17. Control device for an electrically controllable technical device (1), in particular a machine, an installation, a device or a technical process,
comprising a programmable control device (2), and a control panel (4) operatively connected to the control device (2) which is combined structurally with the control device (2) or designed separately (4) and comprises input means (6) for the delivery of control commands to the controllable technical device (1) as well as for the input of data into the control device (2) by an operator (7),
which control panel (4) comprises a graphical output means (8) for representing portions of all of the available information, in particular of status information on the operational or process status of the controllable, technical device (1), which information is provided for inspection by an operator (7) and wherein
by the control device (2) at least one first screen layout (10) for a first screen view of a first portion of all available information can be retrieved from a memory (14) and said first screen view is provided for observing information from the immediate vicinity of the control panel, in particular from within an operating area (9) of the control panel (4) or the technical device (1), **characterised in that**
by the control device (2) in addition at least one second screen layout (11) for a second screen view of a portion of available information can be retrieved from a memory (14), whereby said second screen view is provided for viewing from greater distances, in particular from outside the immediate operating area (9) of the control panel (4) or the technical device (1),
**in that** a detection device (13) operationally connected to the control device (2) or functionally integrated into the control device (2) is designed for determining the presence and/or absence of a person in the immediate operating area (9) of the control panel (4), and
**in that** as a function of a detection value or output signal of the detection device (13) it is switched automatically between the first and second screen layout (10, 11) such that having established the presence of a person in the immediate operating area (9) of the control panel (4) information is output on the graphical output means (8) of the control panel (4) according to the first screen layout (10), and **in that**
if no one is present in the immediate operating area (9) of the control panel (4) information is output on the graphical output means (8) according to the second screen layout (11).

18. Control device according to claim 17, **characterised in that** the control device (2) is operationally connected to at least one detecting device (13) for determining the presence or absence of an operator (7) authorised to operate the technical device (1) or the control device (2) or is structurally combined with at least one such detection device (13).

19. Control device according to claim 17, **characterised in that** the detection device (13) comprises at least one presence sensor (12), which is designed for detecting the presence of general persons or authorised operators (7) in the vicinity of the control panel (4).

20. Control device according to claim 19, **characterised in that** the control device (2) or the detection device (13) is designed for evaluating an output signal or a result of the presence sensor (12) and the presence sensor (12) comprises a response hysteresis with an upper and a lower switching threshold.

21. Control device according to claim 17, **characterised in that** the first screen layout (10) is used for the representation of information with largely smaller character sizes and/or graphics than the second screen layout (11).

22. Control device according to claim 19, **characterised in that** the presence sensor (12) is at least one infrared proximity sensor (19).

23. Control device according to claim 19, **characterised in that** the presence sensor (12) is at least one ultrasound proximity sensor (20).

24. Control device according to claim 19, **characterised in that** the presence sensor (12) is at least one imaging sensor (18), in particular a CCD module or a camera (17).

25. Control device according to claim 19, **characterised in that** the presence sensor (12) is at least one weight-sensitive tread mat (22).

26. Control device according to claim 19, **characterised in that** the presence sensor (12) is formed by at least one light barrier (21).

27. Control device according to claim 19, **characterised in that** the presence sensor (12) is at least one transponder reading device (15).

28. Control device according to claim 19, **characterised in that** the presence sensor (12) is at least one barcode reading device (15).

29. Control device according to claim 17, 18 or 19, **characterised in that** the control device (2), the detection device (13) or the presence sensor (12) is designed such that the response threshold of the presence sensor (12), in particular the distance for identifying the presence of a person can be parameterised.

30. Control device according to claim 29, **characterised in that** the control device (2), the detection device (13) or the presence sensor (12) is designed such that the response threshold is adjusted automatically during the operation of an input means (6) of the operating panel (4) by way of the thereby established output signal or result of the presence sensor (12).

## Revendications

1. Procédé d'utilisation d'un équipement technique (1) commandable électriquement, en particulier une machine, une installation, un appareil ou un processus technique, comprenant un dispositif de commande (2) traitant des signaux et des données, un tableau de commande (4) en relation opératoire avec le dispositif de commande (2) et combiné à ce dispositif au plan de la construction ou positionné de façon séparée, avec des moyens d'entrée (6) destinés à délivrer des instructions de commande à l'équipement technique (1) ainsi qu'à entrer des données dans le dispositif de commande (2) à partir d'un opérateur (7),
lequel tableau de commande (4) comprend un moyen de sortie (8) graphique pour la représentation de quantités partielles d'informations disponibles globalement pour un opérateur (7), en particulier d'informations de statut portant sur l'état de fonctionnement ou de processus de l'équipement technique (1) commandable, **caractérisé par**
- la fourniture d'un moins une première configuration d'écran (10) qui est constituée pour la représentation d'une première quantité partielle d'informations sur le moyen de sortie (8) graphique et qui est prévue pour une observation à partir d'une zone d'utilisation (9) immédiate du tableau de commande (4) ;
- la fourniture d'au moins une deuxième configuration d'écran (11) qui est constituée pour la représentation d'une deuxième quantité partielle d'informations sur le moyen de sortie (8) graphique et qui est prévue pour une observation à partir d'une distance relativement plus grande, en particulier à partir de l'extérieur d'une zone d'utilisation (9) immédiate du tableau de commande (4) ou de l'équipement technique (1);
- la détection automatisée de la présence et/ou de la non-présence d'une personne dans la zone d'utilisation (9) immédiate du tableau de commande (4) ou de l'équipement technique (1) ; et
- la commutation automatisée entre la première et la deuxième configuration d'écran (10, 11) à l'aide de l'état constaté concernant la présence et/ou la non-présence d'une personne dans la zone d'utilisation (9) immédiate du tableau de commande (4) ou de l'équipement technique (1).

2. Procédé selon la revendication 1, **caractérisé en ce que**, en cas de constatation de la présence, dans la zone d'utilisation (9) immédiate du tableau de commande (4), d'un opérateur (7) autorisé à utiliser l'équipement technique (1) ou le dispositif de commande (2), il y a commutation vers la première configuration d'écran (10).

3. Procédé selon la revendication 1, **caractérisé en ce que**, en cas de constatation de la non-présence d'une personne dans la zone d'utilisation (9) immédiate du tableau de commande (4), il y a commutation vers la deuxième configuration d'écran (11).

4. Procédé selon la revendication 1, **caractérisé en ce que**, pour la constatation de la présence d'un opérateur (7), il est fait appel à l'actionnement d'un moyen d'entrée (6) du tableau de commande (4).

5. Procédé selon la revendication 1, **caractérisé en ce que**, pour la constatation de la non-présence d'un opérateur (7), il est fait appel à l'absence de manipulations sur les moyens d'entrée (6) du tableau de commande (4) pendant une première période de temps fixée.

6. Procédé selon la revendication 5, **caractérisé en ce que** la première période de temps fixée est réglable.

7. Procédé selon la revendication 1, **caractérisé en ce que**, pour la constatation de la présence et/ou de la non-présence d'une personne à l'intérieur de la zone d'utilisation (9) immédiate, un signal ou une information d'état d'un détecteur de présence (12), en particulier d'un détecteur de proximité, est analysé(e).

8. Procédé selon la revendication 7, **caractérisé en ce que**, en cas d'actionnement d'un moyen d'entrée (6) du tableau de commande (4), un contrôle de fonctionnement ou un contrôle de plausibilité du fonctionnement du détecteur de présence (12) est effectué.

9. Procédé selon la revendication 1, **caractérisé en ce que** la commutation automatique entre la première et la deuxième configuration d'écran (10, 11) - et inversement - ou respectivement le changement automatique entre la première et la deuxième forme de représentation sur le moyen de sortie (8) graphique peut être désactivé(e) par une manipulation ou un réglage de paramètres prédéfini(e) de telle sorte que la première ou la deuxième configuration d'écran (10, 11) est réglée durablement indépendamment de la présence ou de la non-présence d'une personne.

10. Procédé selon la revendication 1, **caractérisé en ce que** la première quantité partielle d'informations présente un niveau de détail relativement plus élevé ou une profondeur de représentation ou d'information relativement plus élevée que la deuxième quantité partielle d'informations.

11. Procédé selon la revendication 1, **caractérisé en ce que** la deuxième quantité partielle d'informations est formée d'une quantité partielle de la première quantité partielle d'informations.

12. Procédé selon la revendication 1, **caractérisé en ce que**, après l'expiration d'une deuxième période de temps à l'intérieur de laquelle une non-présence de personnes est constatée de façon continue, un écran du moyen de sortie (8) graphique est automatiquement mis en veille ou hors tension et, en cas de présence constatée ensuite d'une personne à l'intérieur de la zone d'utilisation (9) du tableau de commande (4) ou à l'intérieur d'une zone environnante définie autour de l'équipement technique (1), la première ou respectivement la deuxième configuration d'écran (10, 11) est automatiquement rétablie.

13. Procédé selon la revendication 12, **caractérisé en ce que**, pendant ou immédiatement après la mise en veille ou la mise hors tension de l'écran, des composants matériels destinés à la sortie d'informations sur l'écran sont également mis hors tension ou amenés à un mode d'économie de courant.

14. Procédé selon la revendication 1, **caractérisé en ce que**, outre la détection d'informations sur la présence d'une personne, des informations sur l'identité ou l'autorisation de la personne respective sont également acquises ou déterminées.

15. Procédé selon la revendication 14, **caractérisé en ce qu'**une identification de personne ou un contrôle d'autorisation de personnes est effectué(e) au moyen d'un dispositif de lecture (15) pour des supports d'information (16) détectables sans contact, comme par exemple des transpondeurs, des codes à barres, des étiquettes RFID ou similaires.

16. Procédé selon la revendication 14, **caractérisé en ce qu'**une identification de personne ou un contrôle d'autorisation de personnes est effectué(e) au moyen d'une caméra (17) ou d'un détecteur fournissant des images (18) et d'un logiciel de reconnaissance d'images ou d'objets.

17. Dispositif de commande pour un équipement technique (1) commandable électriquement en particulier une machine, une installation, un appareil ou un processus technique,
comprenant un dispositif de commande (2) programmable et un tableau de commande (4), en relation opératoire avec le dispositif de commande (2), qui est combiné au plan de la construction au dispositif de commande (2) ou positionné de façon séparée, et qui présente des moyens d'entrée (6) destinés à délivrer des instructions de commande à l'équipement technique (1) commandable ainsi qu'à entrer des données dans le dispositif de commande (2) à partir d'un opérateur (7),
lequel tableau de commande (4) comprend un moyen de sortie (8) graphique pour la représentation de quantités partielles d'informations disponibles globalement, en particulier d'informations de statut portant sur l'état de fonctionnement ou de processus de l'équipement technique (1) commandable, lesquelles informations sont prévues pour un examen visuel par un opérateur (7), et
au moins une première configuration d'écran (10) pour une première représentation d'écran d'une première quantité partielle d'informations globalement disponibles pouvant être appelée à partir d'une mémoire (14) par le dispositif de commande (2), et cette première représentation d'écran étant prévue pour l'observation d'informations à partir de la proximité immédiate du tableau de commande, en particulier à partir de l'intérieur d'une zone d'utilisation (9) du tableau de commande (4) ou de l'équipement technique (1), **caractérisé en ce que**,
en plus, au moins une deuxième configuration d'écran (11) pour une deuxième représentation d'écran d'une quantité partielle d'informations disponibles peut être appelée à partir d'une mémoire (14) par le dispositif de commande (2), cette deuxième représentation d'écran étant prévue pour une observation à partir de distances plus grandes, en particulier à partir de l'extérieur de la zone d'utilisation (9) immédiate du tableau de commande (4) ou de l'équipement technique (1),
**en ce qu'**un dispositif de détection (13) en relation opératoire avec le dispositif de commande (2) ou intégré fonctionnellement dans le dispositif de commande (2) est constitué pour la détermination de la présence et/ou de la non-présence d'une personne dans la zone d'utilisation (9) immédiate du tableau de commande (4) et
**en ce que**, en fonction d'une valeur de détection ou d'un signal de sortie du dispositif de détection (13), une commutation automatisée entre la première et la deuxième configuration d'écran (10, 11) s'effectue de telle sorte que,
en cas de présence constatée d'une personne dans la zone d'utilisation (9) immédiate du tableau de commande (4), une sortie d'information est effectuée sur le moyen de sortie (8) graphique du tableau de commande (4) en fonction de la première configuration d'écran (10) et
**en ce que**, en cas de non-présence constatée d'une personne dans la zone d'utilisation (9) immédiate du tableau de commande (4), une sortie d'information est effectuée sur le moyen de sortie (8) graphique du tableau de commande (4) en fonction de la deuxième configuration d'écran (11).

18. Dispositif de commande selon la revendication 17, **caractérisé en ce que** le dispositif de commande (2) est en relation opératoire avec au moins un dispositif de détection (13) pour la détermination de la présence ou de la non-présence d'un opérateur (7) autorisé à utiliser l'équipement technique (1) ou le dispositif de commande (2), ou est combiné au plan de la construction avec au moins un dispositif de détection (13) de ce genre.

19. Dispositif de commande selon la revendication 17, **caractérisé en ce que** le dispositif de détection (13) comprend au moins un détecteur de présence (12) qui est constitué pour la détection de la présence de personnes générales ou d'opérateurs (7) autorisés dans la zone proche du tableau de commande (4).

20. Dispositif de commande selon la revendication 19, **caractérisé en ce que** le dispositif de commande (2) ou le dispositif de détection (13) est constitué pour l'analyse d'un signal de sortie ou d'une valeur de résultat du détecteur de présence (12), et le détecteur de présence (12) présente une hystérésis de réponse avec un seuil de commutation supérieur et un seuil de commutation inférieur.

21. Dispositif de commande selon la revendication 17, **caractérisé en ce que** la première configuration d'écran (10) utilise pour la représentation des informations principalement des dimensions de signes et/ou des graphiques plus petit(e)s que la deuxième configuration d'écran (11).

22. Dispositif de commande selon la revendication 19, **caractérisé en ce que** le détecteur de présence (12) est au moins un détecteur de proximité à infrarouge (19).

23. Dispositif de commande selon la revendication 19, **caractérisé en ce que** le détecteur de présence (12) est au moins un détecteur de proximité à ultrason (20).

24. Dispositif de commande selon la revendication 19, **caractérisé en ce que** le détecteur de présence (12) est au moins un capteur fournissant des images (18), en particulier un module CCD ou une caméra (17).

25. Dispositif de commande selon la revendication 19, **caractérisé en ce que** le détecteur de présence (12) est au moins un tapis de contact (22) sensible au poids.

26. Dispositif de commande selon la revendication 19, **caractérisé en ce que** le détecteur de présence (12) est formé d'au moins une barrière photoélectrique (21).

27. Dispositif de commande selon la revendication 19, **caractérisé en ce que** le détecteur de présence (12) présente au moins un dispositif de lecture de transpondeur (15).

28. Dispositif de commande selon la revendication 19, **caractérisé en ce que** le détecteur de présence (12) est au moins un dispositif de lecture de codes à barres (15).

29. Dispositif de commande selon la revendication 17, 18 ou 19, **caractérisé en ce que** le dispositif de commande (2), le dispositif de détection (13) ou le détecteur de présence (12) est constitué de telle sorte qu'un seuil de réponse du détecteur de présence (12), en particulier la distance pour la détection de la présence d'une personne, est paramétrable.

30. Dispositif de commande selon la revendication 29, **caractérisé en ce que** le dispositif de commande (2), le dispositif de détection (13) ou le détecteur de présence (12) est constitué de telle sorte que le seuil de réponse est adapté de façon automatisée pendant l'actionnement d'un moyen d'entrée (6) du tableau de commande (4) à l'aide du signal de sortie ou de la valeur de résultat du détecteur de présence (12) constaté(e) à cette occasion.
